# EUROPEAN PATENT SPECIFICATION

(11) **EP 2 858 306 B1**
(45) Date of publication and mention of the grant of the patent: **08.02.2017**
(21) Application number: 13868268.7
(22) Date of filing: 31.12.2013
(51) Int. Cl.: H04L 12/66, H04L 12/741, H04W 40/02, H04L 12/28, H04W 48/20, H04L 12/703, H04L 12/54

(54) **DATA TRANSMISSION METHOD, DEVICE AND GATEWAY**
DATENÜBERTRAGUNGSVERFAHREN, -VORRICHTUNG UND -SYSTEM
PROCÉDÉ, DISPOSITIF ET PASSERELLE DE TRANSMISSION DE DONNÉES

(30) Priority: 31.12.2012 CN 201210592034
(43) Date of publication of application: 08.04.2015
(73) Proprietor: Huawei Device Co., Ltd., Shenzhen, Guangdong 518129 (CN)
(72) Inventor: ZHANG, Qinliang, Shenzhen Guangdong 518129 (CN); ZHAO, Junjie, Shenzhen Guangdong 518129 (CN); ZHU, Yu, Shenzhen Guangdong 518129 (CN)
(74) Representative: Pfenning, Meinig & Partner mbB
(86) International application number: PCT/CN2013/091129
(87) International publication number: WO 2014/101888

(56) References cited:
- EP-A1- 2 464 054
- WO-A1-2010/082363
- CN-A- 101 217 420
- CN-A- 101 252 472
- US-A1- 2004 049 714
- US-A1- 2007 165 515

## Description

### TECHNICAL FIELD

The present invention relates to communications technologies, and in particular, to a data transmission method, device, and gateway.

### BACKGROUND

A device in a home network is generally connected to an external network (for example, the Internet) through a gateway. An interface between the gateway and the external network is generally referred to as a wide area network (Wide Area Network, WAN for short) interface, and also referred to as an uplink interface, and may be an xDSL interface, a passive optical network (Passive Optical Network, PON for short) interface, or an Ethernet interface, and so on, where xDSL is a collective term for digital subscriber lines (Digital Subscriber Line, DSL for short). An interface between the gateway and the home network is generally referred to as a local area network (Local Area Network, LAN for short) interface, and also referred to as a downlink interface, and may be an Ethernet interface, or a wireless fidelity (Wireless Fidelity, Wi-Fi for short) interface, and so on.

With development of machine-to-machine (Machine-to-Machine, M2M for short) communication, there are more and more M2M devices in a home network. The M2M devices have a higher requirement for connectivity of the network. To improve reliability of a connection between the gateway and the external network, in the prior art, generally two WAN interfaces are configured on the gateway. When one WAN interface is faulty or the external network connected to the WAN interface fails, the gateway is connected to the external network through the other WAN interface. However, because two WAN interfaces need to be configured on the gateway, more hardware is configured on the gateway, but generally, only one WAN interface is used. Therefore, resources are wasted.

Document EP 2 464 054 A1 discloses the preamble of claims 1 and 9.

### SUMMARY

The present invention provides a data transmission method, device, and gateway, so as to improve reliability of communication between a device in a home network and an external network without adding gateway hardware configurations.

According to the invention, a data transmission method is provided and includes:
receiving, by a first device in a home network, a first message sent by a gateway in the home network, where the first message identifies that a first connection between the gateway and an external network is broken;
sending, by the first device after receiving the first message, a second message to the gateway, where the second message is used to enable the gateway to set a first packet forwarding rule on the gateway, where the first packet forwarding rule is used by the gateway to forward packets that come from a second device in the home network and are destined for the external network, to the first device; and
setting, by the first device after receiving the first message, a second packet forwarding rule on the first device, where the second packet forwarding rule is used by the first device to forward packets that come from the gateway and are destined for the external network, through a second connection that is established by the first device with the external network.

A data transmission method is provided and includes:
after a first connection between a gateway in a home network and an external network is broken, sending, by the gateway, a first message to a first device in the home network, where the first message identifies that the first connection is broken, to enable the first device to set a second packet forwarding rule on the first device, where the second packet forwarding rule is used by the first device to forward packets that come from the gateway and are destined for the external network, through a second connection that is established by the first device with the external network; and
receiving, by the gateway, a second message sent by the first device, and setting a first packet forwarding rule on the gateway according to the second message, where the first packet forwarding rule is used by the gateway to forward packets that come from a second device in the home network and are destined for the external network, to the first device.

A data transmission method is provided and includes:
when a first connection between a gateway in a home network and an external network is broken, setting, by the gateway, a first packet forwarding rule on the gateway, where the first packet forwarding rule is used by the gateway to forward packets that come from a second device in the home network and are destined for the external network, to a first device in the home network; and
sending, by the gateway, a first message to the first device, where the first message is used to enable the first device to set a second packet forwarding rule on the first device, where the second packet forwarding rule is used by the first device to forward packets that come from the gateway and are destined for the external network, through a second connection that is established by the first device with the external network.

A data transmission method is provided and includes:
receiving, by a first device in a home network, a first message sent by a gateway in the home network, where the first message is used to enable the first device to set a second packet forwarding rule on the first device, where the second packet forwarding rule is used by the first device to forward packets that come from the gateway and are destined for an external network, through a second connection that is established by the first device with the external network, where the packets that are from the gateway and destined for the external network come from a second device in the home network, and the first message is sent after a first connection between the gateway and the external network is broken; and
setting, by the first device, the second packet forwarding rule according to the first message.

According to the invention, a home network device is provided and includes:
a receiving module, configured to receive a first message sent by a gateway in a home network, where the first message identifies that a first connection between the gateway and an external network is broken;
a sending module, configured to send a second message to the gateway after the receiving module receives the first message, where the second message is used to enable the gateway to set a first packet forwarding rule on the gateway, where the first packet forwarding rule is used by the gateway to forward packets that come from a second device in the home network and are destined for the external network, to the home network device; and
a setting module, configured to set a second packet forwarding rule on the home network device after the receiving module receives the first message, where the second packet forwarding rule is used by the home network device to forward packets that come from the gateway and are destined for the external network, through a second connection that is established by the home network device with the external network.

A home gateway is provided and includes:
a sending module, configured to send a first message to a first device in a home network after a first connection between the home gateway in the home network and an external network is broken, where the first message identifies that the first connection is broken, to enable the first device to set a second packet forwarding rule on the first device, where the second packet forwarding rule is used by the first device to forward packets that come from the home gateway and are destined for the external network, through a second connection that is established by the first device with the external network;
a receiving module, configured to receive a second message sent by the first device; and
a setting module, configured to set a first packet forwarding rule on the home gateway according to the second message, where the first packet forwarding rule is used by the home gateway to forward packets that come from a second device in the home network and are destined for the external network, to the first device.

A home gateway is provided and includes:
a setting module, configured to set a first packet forwarding rule on the home gateway when a first connection between the home gateway in a home network and an external network is broken, where the first packet forwarding rule is used by the home gateway to forward packets that come from a second device in the home network and are destined for the external network, to a first device in the home network; and
a sending module, configured to send a first message to the first device, where the first message is used to enable the first device to set a second packet forwarding rule on the first device, where the second packet forwarding rule is used by the first device to forward packets that come from the home gateway and are destined for the external network, through a second connection that is established by the first device with the external network.

A home network device is provided and includes:
a receiving module, configured to receive a first message sent by a gateway in a home network, where the first message is used to enable the home network device to set a second packet forwarding rule on the home network device, where the second packet forwarding rule is used by the home network device to forward packets that come from the gateway and are destined for an external network, through a second connection that is established by the home network device with the external network, where the packets that are from the gateway and destined for the external network come from a second device in the home network, and the first message is sent after a first connection between the gateway and the external network is broken; and
a setting module, configured to set the second packet forwarding rule according to the first message.

The dependent claims define corresponding embodiments.

With the data transmission method, device, and gateway provided by embodiments of the present invention, after a connection between a gateway and an external network is broken, a second packet forwarding rule is set on a first device in a home network and a first packet forwarding rule is set on the gateway, so that packets that come from a second device in the home network and are destined for the external network can be forwarded by the gateway to the first device, and then forwarded by the first device to the external network. In this way, after the connection between the gateway and the external network is broken, communication between the second device in the home network and the external network is implemented without adding gateway hardware configurations, which improves reliability of communication between a device in the home network and the external network.

### BRIEF DESCRIPTION OF DRAWINGS

To describe the technical solutions in the embodiments of the present invention or in the prior art more clearly, the following briefly introduces the accompanying drawings required for describing the embodiments or the prior art. Apparently, the accompanying drawings in the following description show some embodiments of the present invention, and a person of ordinary skill in the art may still derive other drawings from these accompanying drawings without creative efforts.
FIG. 1 is a flowchart of a data transmission method according to an embodiment of the present invention;
FIG. 2 is a flowchart of a data transmission method according to another embodiment of the present invention;
FIG. 3 is a flowchart of a data transmission method according to still another embodiment of the present invention;
FIG. 4 is a flowchart of a data transmission method according to still another embodiment of the present invention;
FIG. 5 is a flowchart of a data transmission method according to still another embodiment of the present invention;
FIG. 6 is a flowchart of a data transmission method according to still another embodiment of the present invention;
FIG. 7 is a flowchart of a data transmission method according to still another embodiment of the present invention;
FIG. 8 is a flowchart of a data transmission method according to still another embodiment of the present invention;
FIG. 9 is a flowchart of a data transmission method according to still another embodiment of the present invention;
FIG. 10 is a schematic structural diagram of a home network device according to an embodiment of the present invention;
FIG. 11 is a schematic structural diagram of a home network device according to another embodiment of the present invention;
FIG. 12 is a schematic structural diagram of a home gateway according to an embodiment of the present invention;
FIG. 13 is a schematic structural diagram of a home gateway according to another embodiment of the present invention;
FIG. 14 is a schematic structural diagram of a home gateway according to still another embodiment of the present invention;
FIG. 15 is a schematic structural diagram of a home gateway according to still another embodiment of the present invention;
FIG. 16 is a schematic structural diagram of a home network device according to still another embodiment of the present invention; and
FIG. 17 is a schematic structural diagram of a home network device according to still another embodiment of the present invention.

### DESCRIPTION OF EMBODIMENTS

To make the objectives, technical solutions, and advantages of the embodiments of the present invention clearer, the following clearly and completely describes the technical solutions in the embodiments of the present invention with reference to the accompanying drawings in the embodiments of the present invention. Apparently, the described embodiments are a part rather than all of the embodiments of the present invention. All other embodiments obtained by a person of ordinary skill in the art based on the embodiments of the present invention without creative efforts shall fall within the protection scope of the present invention.

In a home network, a device in the home network is generally connected to an external network through a gateway. Herein the external network includes but is not limited to the Internet. A WAN interface of the gateway is generally an xDSL interface, a PON interface, or an Ethernet interface; and a LAN interface of the gateway is generally an Ethernet interface or a Wi-Fi interface. The device in the home network may be a smartphone, a personal computer, or a tablet computer, and so on.

Normally, each device in the home network communicates with the external network through the gateway. However, after a first connection between the gateway and the external network is broken, the device in the home network cannot communicate with the external network. In the prior art, to improve reliability of the connection between the gateway and the external network, a used manner is to configure two WAN interfaces on the gateway, where when one WAN interface is faulty, the other WAN interface is used instead. In this manner, more hardware is configured on the gateway, and because generally only one of the WAN interfaces is used, resources are wasted. An embodiment of the present invention provides a method in which only one WAN interface needs to be configured on the gateway. The method can improve reliability of communication between the device in the home network and the external network. A core idea of the method is as follows: After the connection between the gateway and the external network is broken, the gateway forwards packets that come from the device in the home network and are destined for the external network, to a device that is in the home network and can establish a connection with the external network, and forwards the packets to the external network through the device. The following embodiments describe the technical solution of the present invention in detail.

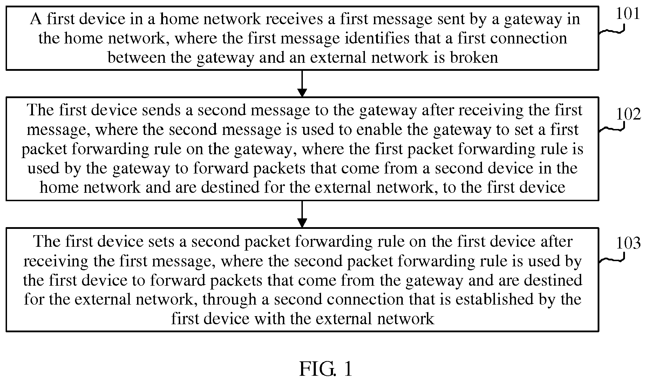

FIG. 1 is a flowchart of a data transmission method according to an embodiment of the present invention. As shown in FIG. 1, the method of this embodiment includes:
Step 101: A first device in a home network receives a first message sent by a gateway in the home network, where the first message identifies that a first connection between the gateway and an external network is broken.
Step 102: The first device sends a second message to the gateway after receiving the first message, where the second message is used to enable the gateway to set a first packet forwarding rule on the gateway, where the first packet forwarding rule is used by the gateway to forward packets that come from a second device in the home network and are destined for the external network, to the first device.
Step 103: The first device sets a second packet forwarding rule on the first device after receiving the first message, where the second packet forwarding rule is used by the first device to forward packets that come from the gateway and are destined for the external network, through a second connection that is established by the first device with the external network.

In this embodiment, a device that may establish a connection with the external network exists in the home network. This embodiment uses a device that can establish a connection with the external network, as an example for description, where the device is marked as the first device. For ease of distinguishing, the connection between the gateway and the external network is marked as the first connection, and the connection between the first device and the external network is marked as the second connection. Optionally, the first connection is a connection established with the external network through an uplink interface of the gateway, and the second connection is a connection established with the external network through a radio interface of the first device. For example, the radio interface may be, but is not limited to, a 3rd generation mobile communications technology (3rd-generation, 3G for short) interface, and in this case, the second connection is a connection established with the external network through the 3G interface.

When the gateway discovers that the first connection between the gateway and the external network is broken, the gateway sends the first message to the first device in the home network, so that the first device can know, according to the first message, that the first connection between the gateway and the external network is broken. The first device receives the first message sent by the gateway, and knows, according to the first message, that the first connection between the gateway and the external network is broken.

Next, the first device sets the second packet forwarding rule locally, where the second packet forwarding rule is used to forward the packets that come from the gateway and are destined for the external network, through the second connection that is established by the first device with the external network. In order that the packets that come from the gateway and are destined for the external network can be successfully forwarded to the external network, the first device needs to establish the second connection with the external network. It is assumed that the second connection between the first device and the external network is a connection established with the external network through the 3G interface. After receiving the first message, the first device not only sets the second packet forwarding rule, but also enables a 3G data function of the first device (if the 3G data function is disabled), so as to establish the second connection with the external network. It is noted herein that generally the 3G data function of the first device is not enabled, and that packets of the first device are forwarded through the gateway.

In addition, the first device further needs to send the second message to the gateway after receiving the first message, where the second message is used to enable the gateway to set the first packet forwarding rule on the gateway. Thereby, the gateway may forward the packets that come from the second device in the home network and are destined for the external network, to the first device. Further, the first device forwards the packets to the external network according to the second packet forwarding rule. Therefore, communication between the second device and the external network is implemented in a case in which the first connection between the gateway and the external network is broken.

In this embodiment, the second device may be any device that is in the home network and needs to send packets to the external network. In a special case, the second device may also be the first device. However, because the packets destined for the external network need to be finally forwarded by the first device to the external network, the packets that are from the first device and destined for the external network may be no longer sent to the gateway, but directly sent by the first device to the external network through the second connection with the external network.

It is noted herein that a sequence of the operation of setting the second packet forwarding rule locally by the first device, and the operation of sending the second message to the gateway by the first device, to enable the gateway to set the first packet forwarding rule, is not limited. That is, the sequence of step 102 and step 103 is not limited.

To complete packet forwarding, the first packet forwarding rule includes but is not limited to a destination address, a next-hop address, and a forwarding interface. In order that the gateway can send the packets of the second device to the first device by using the first packet forwarding rule, a destination address of an entry in the first packet forwarding rule is a network address of a third device in the external network or a default routing address, where the network address includes a network prefix and a network mask. For example, 200.0.0.0/8 indicates a network address, and the number of bits of the network mask is 8; for another example, 0.0.0.0/0 indicates a default routing address. Herein the third device is a destination of the packets that are from the second device and destined for the external network; a next-hop address of the entry in the first packet forwarding rule is an address of the first device; and a forwarding interface of the entry in the first packet forwarding rule is an interface on the gateway and used for communicating with the first device. For example, if the gateway communicates with the first device through a Wi-Fi interface, the first device may act as a Wi-Fi station (Wi-Fi Station, Wi-Fi STA for short), the gateway may act as a Wi-Fi access point (Wi-Fi Access Point, Wi-Fi AP for short), and the forwarding interface of the entry in the first packet forwarding rule is a Wi-Fi interface on the gateway. In order that the gateway can set the first packet forwarding rule, the second message sent by the first device to the gateway includes the following information: a destination address, a next-hop address, and a forwarding interface.

Optionally, the first packet forwarding rule not only enables the gateway to forward the packets that come from the second device and are destined for the external network, to the first device, but also enables the gateway to forward packets that come from the first device and are destined for the second device, to the second device.

Likewise, to complete packet forwarding, the second packet forwarding rule also includes but is not limited to a destination address, a next-hop address, and a forwarding interface. In order that the first device can successfully forward the packets that come from the gateway and are destined for the external network, to the external network, a destination address of an entry in the second packet forwarding rule is a network address of a third device in the external network or a default routing address, where the network address includes a network prefix and a network mask. For example, 200.0.0.0/8 indicates a network address, and the number of bits of the network mask is 8; for another example, 0.0.0.0/0 indicates a default routing address. A next-hop address of the entry in the second packet forwarding rule is an address of a routing device in the external network and connected to the first device; and a forwarding interface of the entry in the second packet forwarding rule is an interface on the first device and used for communicating with the external network. For example, if the first device communicates with the external network by using 3G, the forwarding interface of the entry in the second packet forwarding rule is a 3G interface on the first device.

Optionally, the second packet forwarding rule is not only used by the first device to forward the packets that come from the gateway and are destined for the external network, to the external network, but also used by the first device to forward packets that come from the external network and are destined for the second device, to the gateway, so that the gateway further forwards the packets to the second device by using the first packet forwarding rule.

Optionally, if the first device supports network address translation (Network Address Translation, NAT for short), the first device may further enable the NAT function on the first device. In this way, the first device may communicate with the external network after changing a private IP address of the first device to a public IP address through NAT, which helps to save address resources.

In this embodiment, after a connection between a gateway and an external network is broken, a first device in a home network sets a second packet forwarding rule locally, to enable the gateway to set a first packet forwarding rule, so that packets that come from a second device in the home network and are destined for the external network can be forwarded by the gateway to the first device, and then forwarded by the first device to the external network. After the connection between the gateway and the external network is broken, communication between the second device in the home network and the external network is implemented without adding gateway hardware configurations, which improves reliability of communication between a device in the home network and the external network.

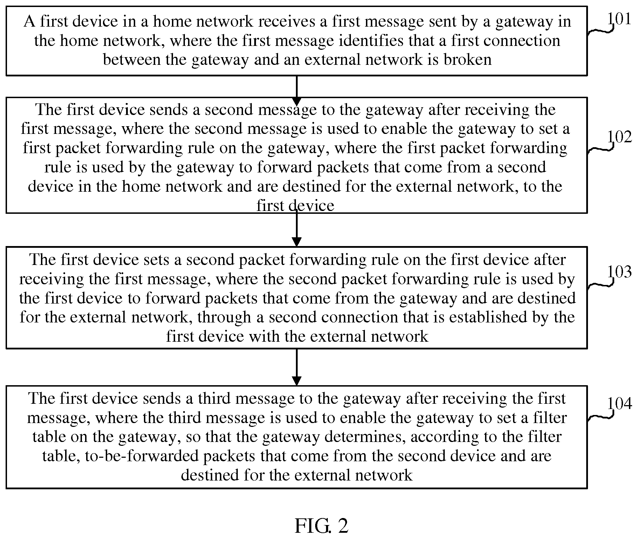

In an optional implementation manner, as shown in FIG. 2, the method of this embodiment further includes:
Step 104: The first device sends a third message to the gateway after receiving the first message, where the third message is used to enable the gateway to set a filter table on the gateway, so that the gateway determines, according to the filter table, to-be-forwarded packets that come from the second device and are destined for the external network.

A sequence between step 104 and the foregoing step 102 and step 103 is also not limited. Optionally, content of the third message may be placed in the second message, and sent to the gateway together with the second message. In this case, step 104 and step 103 may be combined into one step. The step 104 mainly means that the first device enables, by sending the third message to the gateway after knowing that the first connection between the gateway and the external network is broken, the gateway to set the filter table on the gateway. The gateway knows, according to the filter table, which packets need to be forwarded, and which packets do not need to be forwarded. This may help to save traffic. A packet of an important service may be forwarded through the bandwidth-limited second connection between the first device and the external network. The filter table may include a source IP address, a source port, a destination IP address, and a destination port of a packet to be filtered out. Alternatively, the filter table may include a source IP address, a source port, a destination IP address, and a destination port of a packet to be forwarded. Whether the filter table includes information of the packet to be filtered out or information of the packet to be forwarded may be identified by setting an IsWhiteList option in the filter table. If a source IP address, a source port, a destination IP address, and a destination port corresponding to a type of packet are set in a whitelist, it means that this type of packet needs to be forwarded; or if not set in a whitelist, it means that this type of packet needs to be filtered out.

Optionally, the third message may be used only to instruct the gateway to set the filter table. Specific operations of setting the filter table such as setting which type of packet needs to be filtered out and which type of packet needs to be forwarded, may be determined by the gateway itself.

Optionally, the third message may also instruct the gateway to set the filter table, and instruct the gateway how to set the filter table (for example, which type of packet needs to be filtered out and which type of packet needs to be forwarded). Thereby, the gateway may set the filter table according to the instruction of the third message. Based on this, the third message includes some information required for setting the filter table, for example, may include the source IP address, source port number, destination IP address, and destination port number of the packet to be forwarded, and/or the source IP address, source port number, destination IP address, and destination port number of the packet to be filtered out.

As may be seen from the foregoing description, the first device enables, by using the third message, the gateway to set the filter table, which helps to reduce traffic. A packet of an important service may be forwarded preferentially through the second connection between the first device and the external network, which helps to improve utilization of the second connection between the first device and the external network.

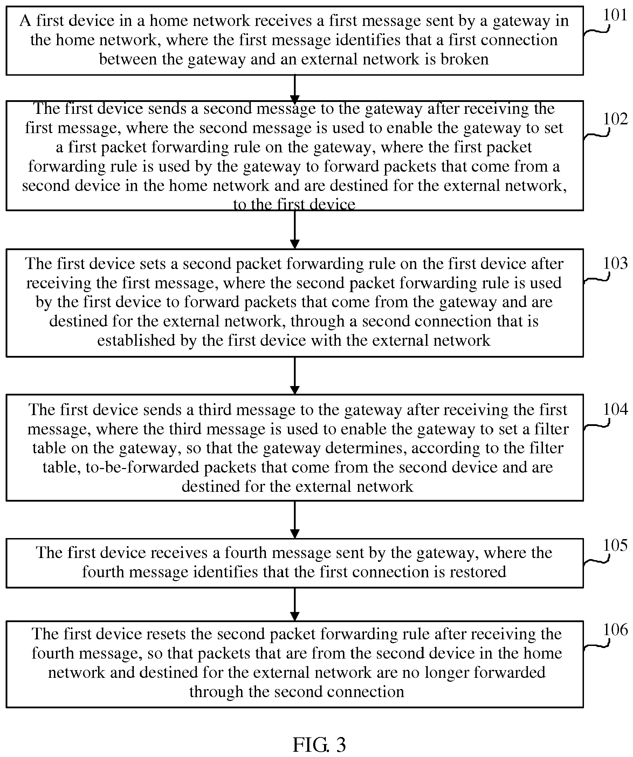

In an optional implementation manner, as shown in FIG. 3, the method of this embodiment further includes:
Step 105: The first device receives a fourth message sent by the gateway, where the fourth message identifies that the first connection is restored.
Step 106: The first device resets the second packet forwarding rule after receiving the fourth message, so that the packets that are from the second device in the home network and destined for the external network are no longer forwarded through the second connection.

Step 105 and step 106 mainly describe a process in which the second device in the home network continues to perform communication with the external network through the gateway after the first connection between the gateway and the external network is restored. In order that the second device can continue to communicate with the external network through the first connection after the first connection is restored, both the gateway and the first device need to process the packet forwarding rules that are set previously. Specifically, the gateway resets the first packet forwarding rule. In this way, after the packets coming from the second device arrive at the gateway, the gateway does not forward the packets to the first device any longer. For example, the gateway may restore configurations available before the first connection is broken, for example, set a forwarding interface for the packets destined for the external network as a WAN interface, and delete the filter table. Thereby, after the packets of the second device arrive at the gateway, the gateway forwards the packets coming from the second device, to the external network through the WAN interface. Correspondingly, the gateway needs to notify the first device of the message identifying that the first connection is restored. The first device resets the second packet forwarding rule, and therefore does not forward the packets through the second connection with the external network any longer. For example, the first device may restore previous configurations, for example, set the forwarding interface for the packets destined for the external network as an interface (for example, a Wi-Fi interface) used for communicating with the gateway, disable the NAT function, and break the second connection with the external network (for example, disable the 3G data function). Thereby, the packets that are from the first device and destined for the external network are also forwarded through the gateway.

As may be seen from the foregoing description, after a connection between a gateway and an external network is broken, packets of a second device are forwarded to the external network through a first device; after the connection between the gateway and the external network is restored, forwarding is continued through the gateway. Advantages such as a high bandwidth and high processing capability of the gateway can be fully utilized while reliability of communication between the second device and the external network is ensured, which helps to improve packet forwarding efficiency.

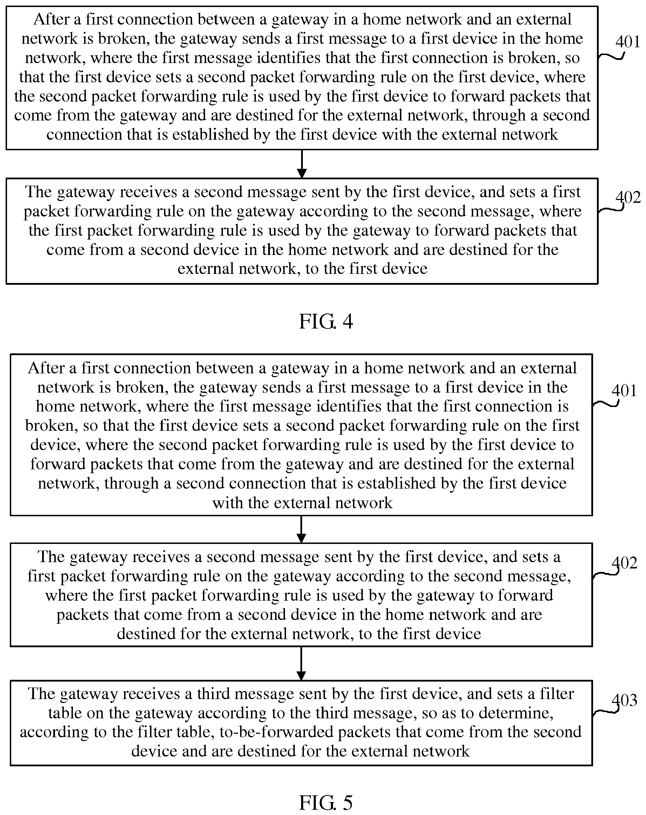

FIG. 4 is a flowchart of a data transmission method according to still another embodiment of the present invention. As shown in FIG. 4, the method of this embodiment includes:
Step 401: After a first connection between a gateway in a home network and an external network is broken, the gateway sends a first message to a first device in the home network, where the first message identifies that the first connection is broken, to enable the first device to set a second packet forwarding rule on the first device, where the second packet forwarding rule is used by the first device to forward packets that come from the gateway and are destined for the external network, through a second connection that is established by the first device with the external network.
Step 402: The gateway receives a second message sent by the first device, and sets a first packet forwarding rule on the gateway according to the second message, where the first packet forwarding rule is used by the gateway to forward packets that come from a second device in the home network and are destined for the external network, to the first device.

This embodiment corresponds to the embodiment shown in FIG. 1, and is described from the perspective of the gateway.

When the gateway discovers that the first connection between the gateway and the external network is broken, the gateway sends the first message to the first device in the home network, so that the first device can know, according to the first message, that the first connection between the gateway and the external network is broken. After receiving the first message sent by the gateway, the first device knows, according to the first message, that the first connection between the gateway and the external network is broken. Therefore, the first device sets the second packet forwarding rule locally, and controls the gateway to set the first packet forwarding rule locally. Thereby, when the packets that are from the second device in the home network and destined for the external network are received, the gateway may forward the received packets to the first device according to the first packet forwarding rule, and the first device forwards the packets to the external network according to the second packet forwarding rule.

A manner of controlling, by the first device, the gateway to set the first packet forwarding rule locally, is: sending a second message to the gateway, where the second message is used to enable the gateway to set the first packet forwarding rule locally. To complete packet forwarding, the first packet forwarding rule includes but is not limited to a destination address, a next-hop address, and a forwarding interface. In order that the gateway can send the packets of the second device to the first device by using the first packet forwarding rule, a destination address of an entry in the first packet forwarding rule is a network address of a third device in the external network or a default routing address, where the network address includes a network prefix and a network mask. For example, 200.0.0.0/8 indicates a network address, and the number of bits of the network mask is 8; for another example, 0.0.0.0/0 indicates a default routing address. Herein the third device is a destination of the packets that are from the second device and destined for the external network; a next-hop address of the entry in the first packet forwarding rule is an address of the first device; and a forwarding interface of the entry in the first packet forwarding rule is an interface on the gateway and used for communicating with the first device. In order that the gateway can set the first packet forwarding rule, the second message sent by the first device to the gateway includes the following information: a destination address, a next-hop address, and a forwarding interface.

Likewise, the second packet forwarding rule also includes but is not limited to a destination address, a next-hop address, and a forwarding interface. A destination address of an entry in the second packet forwarding rule is a network address of a third device in the external network or a default routing address, where the network address includes a network prefix and a network mask. For example, 200.0.0.0/8 indicates a network address, and the number of bits of the network mask is 8; for another example, 0.0.0.0/0 indicates a default routing address. A next-hop address of the entry in the second packet forwarding rule is an address of a routing device in the external network and connected to the first device; and a forwarding interface of the entry in the second packet forwarding rule is an interface on the first device and used for communicating with the external network.

It is noted herein that the second packet forwarding rule is not only used by the first device to forward the packets that come from the gateway and are destined for the external network, to the external network, but also used by the first device to forward packets that come from the external network and are destined for the second device, to the gateway.

The first packet forwarding rule is not only used by the gateway to forward the packets that come from the second device and are destined for the external network, to the first device, but also used by the gateway to forward packets that come from the first device and are destined for the second device, to the second device.

The first connection is a connection established with the external network through an uplink interface of the gateway, and the second connection is a connection established with the external network through a radio interface of the first device. For example, the second connection may be, but is not limited to, a connection established with the external network through a 3G interface, and may also be another wireless connection. Assuming that the second connection is a connection established with the external network through the 3G interface, the forwarding interface in the second packet forwarding rule is a 3G interface on the first device.

Optionally, if the first device may communicate with the gateway through a Wi-Fi interface, the first device may act as a Wi-Fi STA, and the gateway may act as a Wi-Fi AP. Based on this, the forwarding interface in the first packet forwarding rule is a Wi-Fi interface on the gateway.

For other detailed descriptions in this embodiment, reference may be made to the embodiment shown in FIG. 1, and no further description is provided herein.

In this embodiment, after a connection between a gateway and an external network is broken, the gateway sends a first message to a first device in a home network. In this way, the first device can know that the connection between the gateway and the external network is broken, and then set a second packet forwarding rule locally and control the gateway to set a first packet forwarding rule, so that packets that come from a second device in the home network and are destined for the external network can be forwarded by the gateway to the first device, and then forwarded by the first device to the external network. After the connection between the gateway and the external network is broken, communication between the second device in the home network and the external network is implemented without adding gateway hardware configurations, which improves reliability of communication between a device in the home network and the external network.

In an optional implementation manner, as shown in FIG. 5, the method of this embodiment further includes:
Step 403: The gateway receives a third message sent by the first device, and sets a filter table on the gateway according to the third message, so as to determine, according to the filter table, to-be-forwarded packets that come from the second device and are destined for the external network.

A sequence of step 403 and the foregoing step 402 is not limited.

This implementation manner is not further described herein. For details, reference may be made to the embodiment shown in FIG. 2. Optionally, content of the third message may be placed in the second message, and sent to the gateway together with the second message. In this case, step 403 and step 402 may be combined into one step. Step 403 mainly describes the setting of the filter table by the gateway under control of the first device. In this way, forwarded traffic can be reduced, a packet of an important service can be forwarded successfully through the second connection, and utilization of the second connection is improved.

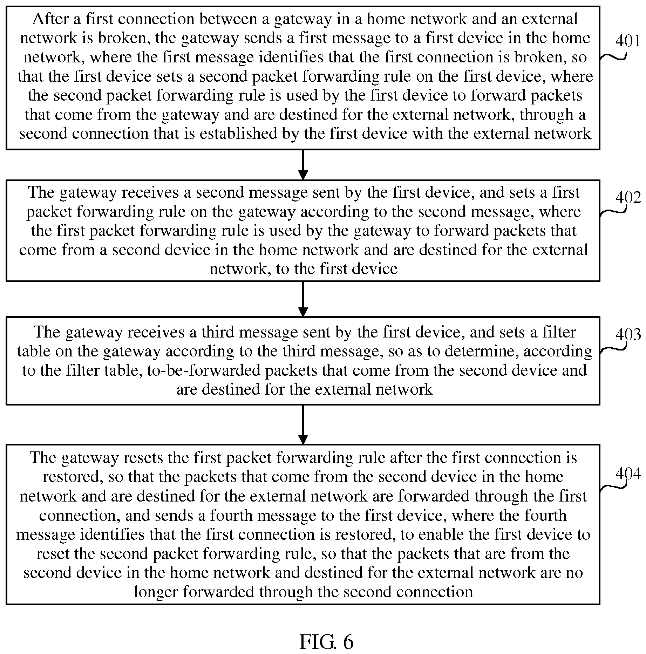

In an optional implementation manner, as shown in FIG. 6, the method of this embodiment further includes:
Step 404: The gateway resets the first packet forwarding rule after the first connection is restored, so that the packets that come from the second device in the home network and are destined for the external network are forwarded through the first connection, and sends a fourth message to the first device, where the fourth message identifies that the first connection is restored, to enable the first device to reset the second packet forwarding rule, so that the packets that are from the second device in the home network and destined for the external network are no longer forwarded through the second connection.

The step 404 mainly describes a process in which after the first connection between the gateway and the external network is restored, the gateway and the first device respectively restore, by resetting the previous packet forwarding rules, configurations available before the first connection is broken, so that the packets of the second device continue to be forwarded to the external network through the gateway.

This implementation manner is not further described herein. For details, reference may be made to the embodiment shown in FIG. 3.

As may be seen from the foregoing description, after a connection between a gateway and an external network is broken, packets of a second device are forwarded to the external network through a first device; after the connection between the gateway and the external network is restored, forwarding is continued through the gateway. Advantages such as a high bandwidth and high processing capability of the gateway can be fully utilized while reliability of communication between the second device and the external network is ensured, which helps to improve packet forwarding efficiency.

In an optional implementation manner, the gateway communicates with the first device by using the Universal Plug and Play (Universal Plug and Play, UPnP for short) protocol.

The following embodiment describes in detail procedures of the embodiments shown in FIG. 1 to FIG. 6, by using an example that the first device is a smartphone, and the smartphone communicates with the gateway by using the UPnP protocol, and performs communication through Wi-Fi.

In this embodiment, the gateway acts as a Wi-Fi AP, the smartphone acts as a Wi-Fi STA, and in the home network, the smartphone and the gateway are interconnected through Wi-Fi; the smartphone supports a 3G access function used for high-speed Internet access; and the smartphone supports NAT.

In a normal state, the smartphone accesses the gateway through Wi-Fi. The gateway communicates with the smartphone through Wi-Fi, the gateway supports a Wi-Fi AP function, and the smartphone supports a Wi-Fi STA function.

The smartphone subscribes to an event from the gateway. The gateway supports a UPnP WAN side IP connection (UPnP WANIPConnection:2) service, where a status variable ConnectionStatus in the UPnP WANIPConnection:2 service indicates an uplink status of the gateway. The smartphone supports a control point. After the smartphone subscribes to the event from the gateway, if the WAN connection of the gateway is broken, a value of the status variable ConnectionStatus is changed, and the changed value is reported to the smartphone by using a UPnP event.

After the WAN connection of the gateway is broken, in a condition that the smartphone accesses the gateway through Wi-Fi, the gateway reports a UPnP event that the WAN connection is broken, to the smartphone through Wi-Fi. The smartphone performs the following operations after receiving the UPnP event:
(1) Enable a 3G data function (the smartphone generally does not enable the 3G data function when accessing the Internet through the gateway), use a 3G interface as an uplink interface, modify a routing entry of the smartphone, and change an outbound interface of a default routing entry from a Wi-Fi interface to the 3G interface, and a next-hop address to an IP address of a router connected to the 3G interface; in this case, the Wi-Fi function of the smartphone is still enabled, and the smartphone still acts as a Wi-Fi STA; and enable the NAT function.
(2) The smartphone sends a command for modifying a packet forwarding rule and a filter entry to the gateway. The smartphone modifies the packet forwarding rule on the gateway by using action SetRoute() in the UPnP WANIPConnection:2 service, where the packet forwarding rule includes a destination address, a next-hop address, and a forwarding interface field. For example, after receiving SetRoute(), the gateway sets an entry of the packet forwarding rule on the gateway as follows: The destination address is a network address, for example, 200.0.0.0/8, where 8 indicates the number of bits of a mask, and if a result of performing an AND operation on a destination IP address in a forwarded packet and the 8-bit mask is 200.0.0.0, the packet forwarding rule is matched; the forwarding interface is a Wi-Fi interface, and the next-hop address is an IP address of the smartphone, which indicates that if a destination IP address of a packet to be forwarded matches 200.0.0.0/8 in the packet forwarding rule, the packet will be forwarded from the Wi-Fi interface to the smartphone. For another example, after receiving SetRoute(), the gateway sets the packet forwarding rule on the gateway as follows: The destination address is a default routing address 0.0.0.0/0, the forwarding interface is a Wi-Fi interface, and the next-hop address is an IP address of the smartphone, which indicates that, by default (a packet to be forwarded does not match any other forwarding rule), the packet will be forwarded from the Wi-Fi interface to the smartphone, where the entry of the forwarding rule may be referred to as a default entry of the packet forwarding rule. The smartphone sets the filter table on the gateway by using action SetFilter() in the UPnP WANIPConnection:2 service, so that the gateway forwards only packets of some devices or packets of some important services to save traffic. The operation of modifying the filter entry on the gateway by the smartphone is an optional operation.

Optionally, the smartphone may obtain confirmation of a user before executing the foregoing operation.

A parameter list of action SetRoute() is listed in Table 1; and a parameter list of action SetFilter() is listed in Table 2.

**Table 1**

| **Parameter name** | **Direction** | **Parameter description** |
|---|---|---|
| DestinationAddress | Input parameter | Destination address in the packet forwarding rule |
| Gateway | Input parameter | Next-hop address in the packet forwarding rule |
| Interface | Input parameter | Forwarding interface in the packet forwarding rule |

**Table 2**

| **Parameter name** | **Direction** | **Parameter description** |
|---|---|---|
| SourceAddress | Input parameter | Source IP address |
| SourcePort | Input parameter | Source port number |
| DestinationAddress | Input parameter | Destination IP address |
| DestinationPort | Input parameter | Destination port number |
| IsWhiteList | Input parameter | Whitelist or not |

Further, after the WAN connection of the gateway is restored, the gateway restores configurations before the WAN connection is broken: An outbound interface of a default route on the gateway is changed to a WAN interface; and the filter table set by the smartphone on the gateway is deleted. If the smartphone accesses the gateway through Wi-Fi, the gateway reports a UPnP event that the WAN connection is restored, to the smartphone through Wi-Fi.

After receiving the UPnP event that the WAN connection is restored, the smartphone performs the following operations to restore configurations available before the smartphone accesses the Internet: The 3G data function is disabled, and the outbound interface of the default routing entry is a Wi-Fi interface; in this case, the Wi-Fi function is still enabled, and the smartphone still acts as a Wi-Fi STA; and the NAT function of the smartphone is disabled.

Optionally, if the smartphone does not receive the UPnP event that is sent by the gateway and indicates that the WAN connection is restored, but the user already knows, in another manner, the user may manually disable the function of accessing the Internet by using 3G through the smartphone.

It is noted herein that the reported UPnP event that the WAN connection is restored in this embodiment, is equivalent to the first message in the foregoing embodiment; the action SetRoute() command in this embodiment is equivalent to the second message in the foregoing embodiment; the action SetFilter() command in this embodiment is equivalent to the third message in the foregoing embodiment; the reported UPnP event that the WAN connection is restored in this embodiment, is equivalent to the fourth message in the foregoing embodiment.

As may be seen from the foregoing description, in this embodiment, after a connection between a gateway and an external network is broken, a smartphone modifies a local packet forwarding rule and modifies a packet forwarding rule on the gateway, so that packets that come from another device in a home network and are destined for the external network can be forwarded by the gateway to the smartphone, and then forwarded by the smartphone to the external network. After the connection between the gateway and the external network is broken, communication between a device in the home network and the external network is implemented without adding gateway hardware configurations, and reliability of communication between devices in the home network and the external network is improved. In addition, the smartphone communicates with the gateway by using the UPnP protocol, and implementation is more flexible.

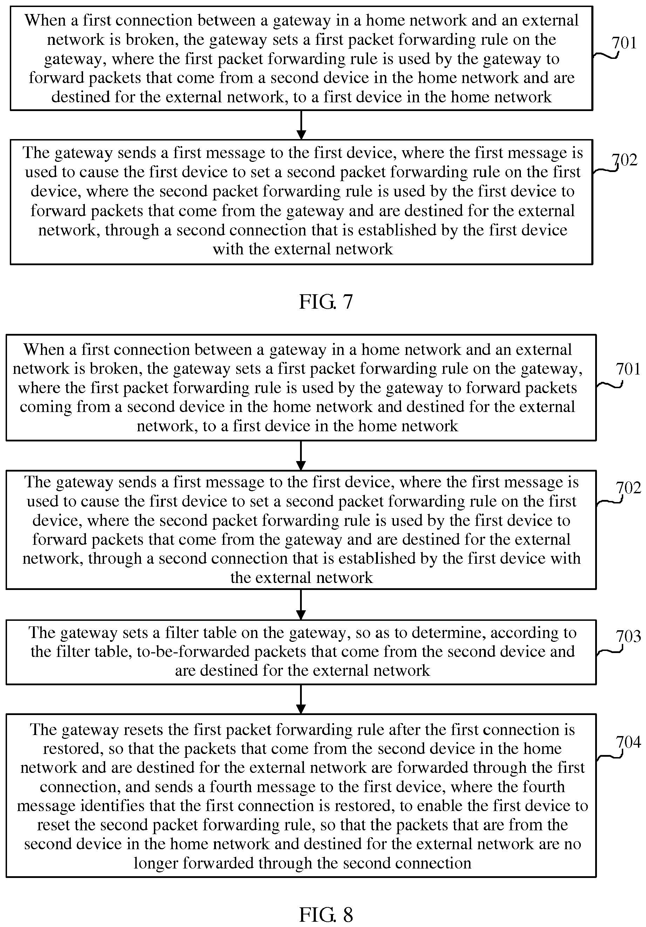

FIG. 7 is a flowchart of a data transmission method according to still another embodiment of the present invention. As shown in FIG. 7, the method of this embodiment includes:
Step 701: When a first connection between a gateway in a home network and an external network is broken, the gateway sets a first packet forwarding rule on the gateway, where the first packet forwarding rule is used by the gateway to forward packets that come from a second device in the home network and are destined for the external network, to a first device in the home network.
Step 702: The gateway sends a first message to the first device, where the first message is used to enable the first device to set a second packet forwarding rule on the first device, where the second packet forwarding rule is used by the first device to forward packets that come from the gateway and are destined for the external network, through a second connection that is established by the first device with the external network.

In this embodiment, a device that may establish a connection with the external network exists in the home network. This embodiment uses a device that can establish a connection with the external network, as an example for description, where the device is marked as the first device. For ease of distinguishing, the connection between the gateway and the external network is marked as the first connection, and the connection between the first device and the external network is marked as the second connection. Optionally, the first connection is a connection established with the external network through an uplink interface of the gateway, and the second connection is a connection established with the external network through a radio interface of the first device. For example, the second connection may be but is not limited to a connection established with the external network through a 3G interface.

After the gateway discovers that the first connection between the gateway and the external network is broken, the gateway sets the first packet forwarding rule on the gateway. Thereby, the gateway may forward, by using the first packet forwarding rule, the packets that come from the second device in the home network and are destined for the external network, to the first device.

In addition, the gateway further sends the first message to the first device, where the first message may enable the first device to set the second packet forwarding rule locally, where the second packet forwarding rule is used to forward the packets that come from the gateway and are destined for the external network, to the external network. In order that the packets that come from the gateway and are destined for the external network can be successfully forwarded to the external network, the first device needs to establish the second connection with the external network. It is assumed that the second connection between the first device and the external network is a connection established with the external network through the 3G interface. After receiving the first message, the first device not only sets the second packet forwarding rule, but also enables a 3G data function of the first device so as to establish a connection with the external network through the 3G interface. It is noted herein that in a normal case, the 3G data function of the first device is not enabled, and that packets of the first device are forwarded through the gateway.

In this embodiment, the second device may be any device that is in the home network and needs to send packets to the external network. In a special case, the second device may also be the first device. However, because the packets destined for the external network need to be finally forwarded by the first device to the external network, the packets that are from the first device and destined for the external network may be no longer sent to the gateway, but directly sent by the first device to the external network through the second connection with the external network.

It is noted herein that a sequence of the operation of setting the first packet forwarding rule locally by the gateway and the operation of sending the first message to the first device, to enable the first device to set the second packet forwarding rule locally, is not limited.

To complete packet forwarding, the first packet forwarding rule includes but is not limited to a destination address, a next-hop address, and a forwarding interface. In order that the gateway can send the packets of the second device to the first device by using the first packet forwarding rule, a destination address of an entry in the first packet forwarding rule is a network address of a third device in the external network or a default routing address, where the network address includes a network prefix and a network mask. For example, 200.0.0.0/8 indicates a network address, and the number of bits of the network mask is 8; for another example, 0.0.0.0/0 indicates a default routing address. Herein the third device is a destination of the packets that are from the second device and destined for the external network; a next-hop address of the entry in the first packet forwarding rule is an address of the first device; and a forwarding interface of the entry in the first packet forwarding rule is an interface on the gateway and used for communicating with the first device. Using an example for description, if the gateway communicates with the first device through a Wi-Fi interface, the first device may act as a Wi-Fi STA, the gateway may act as a Wi-Fi AP, and the forwarding interface in the first packet forwarding rule is a Wi-Fi interface on the gateway.

Optionally, the first packet forwarding rule not only enables the gateway to forward the packets that come from the second device and are destined for the external network, to the first device, but also enables the gateway to forward packets that come from the first device and are destined for the second device, to the second device.

Likewise, to complete packet forwarding, the second packet forwarding rule also includes but is not limited to a destination address, a next-hop address, and a forwarding interface. In order that the first device can successfully forward the packets that come from the gateway and are destined for the external network, to the external network, a destination address of an entry in the second packet forwarding rule is a network address of a third device in the external network or a default routing address, where the network address includes a network prefix and a network mask. For example, 200.0.0.0/8 indicates a network address, and the number of bits of the network mask is 8 bits; for another example, 0.0.0.0/0 indicates a default routing address. A next-hop address of the entry in the second packet forwarding rule is an address of a routing device in the external network and connected to the first device; and a forwarding interface of the entry in the second packet forwarding rule is an interface on the first device and used for communicating with the external network. For example, if the first device communicates with the external network by using 3G, the forwarding interface in the second packet forwarding rule is a 3G interface on the first device. In order that the first device can set the second packet forwarding rule, the first message sent by the gateway to the first device includes the following information: a destination address, a next-hop address, and a forwarding interface.

Optionally, the second packet forwarding rule is not only used by the first device to forward the packets that come from the gateway and are destined for the external network, to the external network, but also used by the first device to forward packets that come from the external network and are destined for the second device, to the gateway, so that the gateway further forwards the packets to the second device by using the first packet forwarding rule.

In this embodiment, after a connection between a gateway and an external network is broken, the gateway sets a first packet forwarding rule locally and controls a first device in a home network to set a second packet forwarding rule locally, so that packets that come from a second device in the home network and are destined for the external network can be forwarded by the gateway to the first device, and then forwarded by the first device to the external network. After the connection between the gateway and the external network is broken, communication between the second device in the home network and the external network is implemented without adding gateway hardware configurations, which improves reliability of communication between a device in the home network and the external network.

In an optional implementation manner, as shown in FIG. 8, the method of this embodiment further includes:
Step 703: The gateway sets a filter table on the gateway, so as to determine, according to the filter table, to-be-forwarded packets that come from the second device and are destined for the external network.

A sequence between step 703 and the foregoing step 701 and step 702 is not limited. The step 703 mainly means a process of setting the filter table locally by the gateway after the first connection between the gateway and the external network is broken. The gateway knows, according to the filter table, which packets need to be forwarded, and which packets do not need to be forwarded. This may help to save traffic. A packet of an important service may be forwarded through the bandwidth-limited second connection between the first device and the external network. The filter table may include a source IP address, a source port, a destination IP address, and a destination port of a packet to be filtered out. Alternatively, the filter table may include a source IP address, a source port, a destination IP address, and a destination port of a packet to be forwarded. Whether the filter table includes information of the packet to be filtered out or information of the packet to be forwarded may be identified by setting an IsWhiteList option in the filter table. If a source IP address, a source port, a destination IP address, and a destination port corresponding to a type of packet are set in a whitelist, it means that this type of packet needs to be forwarded; or if not set in a whitelist, it means that this type of packet needs to be filtered out.

As may be seen from the foregoing description, after the connection between the gateway and the external network is broken, the gateway sets the filter table locally, which helps to reduce traffic. A packet of an important service may be forwarded preferentially through the second connection between the first device and the external network, which helps to improve utilization of the second connection between the first device and the external network.

In an optional implementation manner, as shown in FIG. 8, the method of this embodiment further includes:
Step 704: The gateway resets the first packet forwarding rule after the first connection is restored, so that the packets that come from the second device in the home network and are destined for the external network are forwarded through the first connection, and sends a fourth message to the first device, where the fourth message identifies that the first connection is restored, to enable the first device to reset the second packet forwarding rule, so that the packets that are from the second device in the home network and destined for the external network are no longer forwarded through the second connection.

Step 704 mainly describes a process in which the second device in the home network continues to perform communication with the external network through the gateway after the first connection between the gateway and the external network is restored. In order that the second device can continue to communicate with the external network through the first connection after the first connection is restored, both the gateway and the first device need to process the packet forwarding rules that are set previously. Specifically, the gateway resets the first packet forwarding rule. In this way, after the packets coming from the second device arrive at the gateway, the gateway does not forward the packets to the first device any longer. For example, the gateway may restore configurations available before the first connection is broken, for example, set a forwarding interface for the packets destined for the external network as a WAN interface, and delete the filter entry that is set previously. Thereby, after the packets of the second device arrive at the gateway, the gateway forwards the packets coming from the second device, to the external network through the WAN interface. Correspondingly, the gateway needs to notify the message identifying that the first connection is restored, to the first device. The first device resets the second packet forwarding rule, and therefore does not forward the packets through the second connection with the external network any longer. For example, the first device may restore previous configurations, for example, set the forwarding interface for the packets destined for the external network as an interface (for example, a Wi-Fi interface) used for communicating with the gateway, disable the NAT function, and break the second connection with the external network (for example, disable the 3G data function). Thereby, the packets that are from the first device and destined for the external network are also forwarded through the gateway.

As may be seen from the foregoing description, after a connection between a gateway and an external network is broken, packets of a second device are forwarded to the external network through a first device; after the connection between the gateway and the external network is restored, forwarding is continued through the gateway. Advantages such as a high bandwidth and high processing capability of the gateway can be fully utilized while reliability of communication between the second device and the external network is ensured, which helps to improve packet forwarding efficiency.

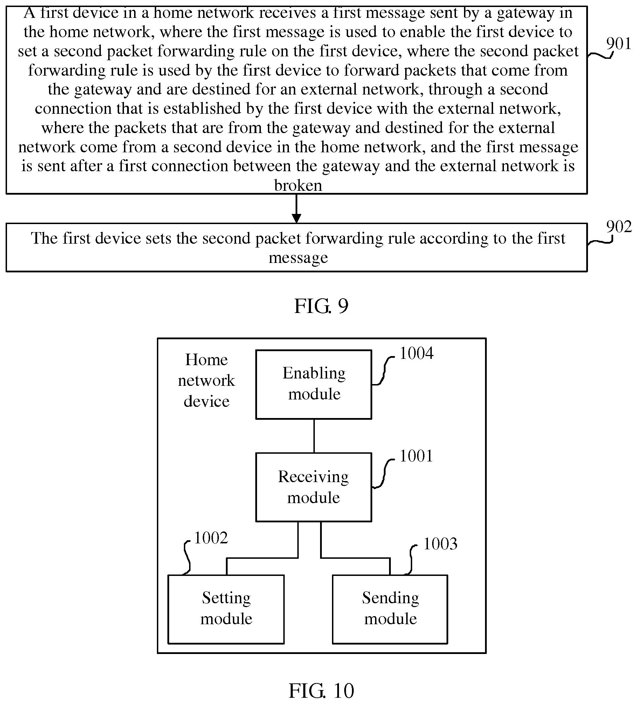

FIG. 9 is a flowchart of a data transmission method according to still another embodiment of the present invention. As shown in FIG. 9, the method of this embodiment includes:
Step 901: A first device in a home network receives a first message sent by a gateway in the home network, where the first message is used to enable the first device to set a second packet forwarding rule on the first device, where the second packet forwarding rule is used by the first device to forward packets that come from the gateway and are destined for an external network, through a second connection that is established by the first device with the external network, where the packets that are from the gateway and destined for the external network come from a second device in the home network, and the first message is sent after a first connection between the gateway and the external network is broken.
Step 902: The first device sets the second packet forwarding rule according to the first message.

This embodiment corresponds to the embodiment shown in FIG. 6, and is described from the perspective of the first device.

The first connection is a connection established with the external network through an uplink interface of the gateway, and the second connection is a connection established with the external network through a radio interface of the first device.

Optionally, if the first device may communicate with the gateway through a Wi-Fi interface, the first device may act as a Wi-Fi STA, and the gateway may act as a Wi-Fi AP.

To implement packet forwarding, the second packet forwarding rule includes but is not limited to a destination address, a next-hop address, and a forwarding interface. In order that the packets that come from the gateway device and are destined for the external network are forwarded to the external network, a destination address of an entry in the second packet forwarding rule is a network address of a third device in the external network or a default routing address; a next-hop address of the entry in the second packet forwarding rule is an address of a routing device in the external network and connected to the first device; and a forwarding interface of the entry in the second packet forwarding rule is an interface on the first device and used for communicating with the external network.

Optionally, the second packet forwarding rule may be not only used by the first device to forward the packets that come from the gateway and are destined for the external network, to the external network, but also used by the first device to forward packets that come from the external network and are destined for the second device, to the gateway.

Optionally, if the first device supports NAT, the first device may not only set the second packet forwarding rule, but also enable a NAT function on the first device.

For detailed descriptions about this embodiment, reference may be made to corresponding descriptions in the embodiments shown in FIG. 6 to FIG. 8, and no further description is provided herein.

In this embodiment, after a connection between a gateway and an external network is broken, a first device, under control of the gateway in a home network, sets a second packet forwarding rule locally, so that packets that come from a second device in the home network and are destined for the external network can be forwarded by the gateway to the first device, and then forwarded by the first device to the external network. After the connection between the gateway and the external network is broken, communication between the second device in the home network and the external network is implemented without adding gateway hardware configurations, which improves reliability of communication between a device in the home network and the external network.

In an optional implementation manner, the gateway communicates with the first device by using the UPnP protocol.

The following embodiment describes in detail procedures of the embodiments shown in FIG. 7 to FIG. 9, by using an example that the first device is a smartphone, and the smartphone communicates with the gateway by using the UPnP protocol, and performs communication through Wi-Fi.

In this embodiment, the gateway acts as a Wi-Fi AP, the smartphone acts as a Wi-Fi STA, and in the home network, the smartphone and the gateway are interconnected through Wi-Fi; the smartphone supports a 3G access function used for high-speed Internet access; the smartphone supports NAT.

In a normal state, the smartphone accesses the gateway through Wi-Fi. The gateway communicates with the smartphone through Wi-Fi, the gateway supports a Wi-Fi AP function, and the smartphone supports a Wi-Fi STA function.

The gateway discovers capabilities of devices in the home network. First, two commands (Actions) are added to a UPnP WANIPConnection:2 service: StartRouter() and StopRouter(). StartRouter() is applicable to devices (for example, a smartphone) in the home network which support connections with the external network and have a routing function, and used to enable routing and forwarding functions of the devices; StopRouter() may stop the routing and forwarding functions of the devices which are enabled by using StartRouter(). Assuming that the UPnP WANIPConnection:2 service is deployed on the smartphone in this embodiment, other devices in the home network may be connected to the external network through the smartphone after the connection between the gateway and the external network is broken. A UPnP control point function is deployed on the gateway, and the gateway discovers a device in the home network by using the UPnP protocol. If the gateway discovers that a device in the home network supports the WANIPConnection:2 service and supports Action StartRouter(), it may be determined that the device supports a function of connecting to the external network. In this embodiment, it is assumed that the gateway discovers that the smartphone supports the function of connecting to the external network.

After the WAN connection of the gateway is broken, the gateway sends the StartRouter() command to the smartphone. It is noted herein that if the gateway discovers that multiple devices supporting the function of connecting to the external network exist in the home network, the gateway may select a device from the devices to send the StartRouter() command.

The smartphone performs the following operations after receiving StartRouter().

Enable a 3G data function (the smartphone generally does not enable the 3G data function when accessing the Internet through the gateway), use a 3G interface as an uplink interface, modify a packet forwarding rule of the smartphone, change an outbound interface of a default entry of the packet forwarding rule from a Wi-Fi interface to the 3G interface, and change a next-hop address to an IP address of a routing device connected to the 3G interface, in the external network; in this case, the Wi-Fi function is still enabled, and the smartphone still acts as a Wi-Fi STA; and enable the NAT function of the smartphone.

Optionally, if the smartphone successfully executes the foregoing operations, the smartphone may return a StartRouter() response packet to the gateway, where the StartRouter() response packet includes an execution success indication. If the smartphone does not successfully execute the foregoing operations, the smartphone returns a StartRouter() response packet to the gateway, where the StartRouter() response message includes an execution failure indication.

Optionally, the smartphone may obtain confirmation of a user before executing the foregoing operation.

Correspondingly, the gateway executes the following operations so that the gateway can forward packets received from other devices in the home network to the smartphone and forward the packets to the external network through the smartphone: modify a default packet forwarding rule on the gateway, change an outbound interface of the default packet forwarding rule on the gateway to a Wi-Fi interface, change a next-hop address to an IP address of the smartphone, and set a filter table on the gateway, so that the gateway forwards only packets of some devices or packets of some important services to save traffic. Modifying the filter table on the gateway is an optional operation.

Based on the operation of returning the StartRouter() response packet by the smartphone, the gateway may execute the foregoing operations in a case in which the StartRouter() response packet includes an execution success indication. If the StartRouter() response packet includes an execution failure indication, the gateway continues to select other devices in the home network which support the function of connecting to the external network, to perform forwarding processing.

After the WAN connection of the gateway is restored, the gateway restores configurations before the WAN connection is broken: An outbound interface of a default route on the gateway is changed to a WAN interface; and the filter entry that is set previously on the gateway is deleted. If the smartphone accesses the gateway through Wi-Fi, the gateway sends an Action StopRouter() command to the smartphone.

After receiving StopRouter(), the smartphone performs the following operations to restore configurations before accessing the Internet through the smartphone: The 3G data function is disabled, and the outbound interface of the default packet forwarding rule is a Wi-Fi interface; in this case, the Wi-Fi function is still enabled, and the smartphone still acts as a Wi-Fi STA; and the NAT function of the smartphone is disabled.

Optionally, if the smartphone does not receive the StopRouter() command that is sent by the gateway, but the user already knows, in other manners, that the WAN side connection is restored, the user may manually disable the function of accessing the Internet by using 3G through the smartphone.

Based on the foregoing description, when a device that is in the home network and different from the smartphone needs to send a packet to the external network, the device generates a packet. Because a next-hop address of a default route on the device is still a LAN side IP address of the gateway, the packet is forwarded to the gateway according to the default packet forwarding rule; when the gateway receives the packet sent by the device to the external network, the gateway discovers, according to the default packet forwarding rule, that a next-hop address of the packet is an IP address of the smartphone and that an outbound interface is a Wi-Fi interface, and the gateway forwards the packet to the smartphone through the Wi-Fi interface; after receiving the packet forwarded by the gateway, the smartphone discovers, according to the default packet forwarding rule, that an outbound interface of the packet is a 3G interface, and the smartphone performs NAT translation for a source address of the packet, and then forwards the packet to the external network through the 3G interface. If the gateway in the home network needs to send a packet to the external network, after the gateway generates the packet, the gateway may discover, according to the default packet forwarding rule, that a next-hop address of the packet is the IP address of the smartphone and that an outbound interface is a Wi-Fi interface; the gateway forwards the packet to the smartphone through the Wi-Fi interface, and then the packet is forwarded by the smartphone to the external network. If the smartphone needs to send a packet to the external network, after the smartphone generates the packet, the smartphone discovers, according to the default packet forwarding rule, that an outbound interface of the packet is a 3G interface, and the packet may be directly sent to the external network through the 3G interface.

As may be seen from the foregoing description, in this embodiment, after a connection between a gateway and an external network is broken, the gateway modifies a local packet forwarding rule and controls a smartphone to modify an entry of a local packet forwarding rule, so that packets that come from another device in a home network and are destined for the external network can be forwarded by the gateway to the smartphone, and then forwarded by the smartphone to the external network. After the connection between the gateway and the external network is broken, communication between a device in the home network and the external network is implemented without adding gateway hardware configurations, and reliability of communication between devices in the home network and the external network is improved. In addition, the smartphone communicates with the gateway by using the UPnP protocol, and implementation is more flexible.

FIG. 10 is a schematic structural diagram of a home network device according to an embodiment of the present invention. As shown in FIG. 10, the home network device of this embodiment includes: a receiving module 1001, a setting module 1002, and a sending module 1003.

The receiving module 1001 is configured to receive a first message sent by a gateway in a home network, where the first message identifies that a first connection between the gateway and an external network is broken.

The sending module 1003 is connected to the receiving module 1001, and configured to send a second message to the gateway after the receiving module 1001 receives the first message, where the second message is used to enable the gateway to set a first packet forwarding rule on the gateway, where the first packet forwarding rule is used by the gateway to forward packets that come from a second device in the home network and are destined for the external network, to the home network device of this embodiment.

The setting module 1002 is connected to the receiving module 1001, and configured to set a second packet forwarding rule on the home network device of this embodiment after the receiving module 1001 receives the first message, where the second packet forwarding rule is used by the home network device of this embodiment to forward packets that come from the gateway and are destined for the external network, through a second connection that is established by the home network device of this embodiment with the external network.

In an optional implementation manner, the sending module 1003 is further configured to send a third message to the gateway after the receiving module 1001 receives the first message, where the third message is used to enable the gateway to set a filter table on the gateway, so that the gateway determines, according to the filter table, to-be-forwarded packets that come from the second device and are destined for the external network.

In an optional implementation manner, the receiving module 1001 is further configured to receive a fourth message sent by the gateway, where the fourth message identifies that the first connection is restored. Correspondingly, the setting module 1002 is further configured to reset the second packet forwarding rule after the receiving module 1001 receives the fourth message, so that the packets that are from the second device in the home network and destined for the external network are no longer forwarded through the second connection.

The first connection is a connection established with the external network through an uplink interface of the gateway, and the second connection is a connection established with the external network through a radio interface of the home network device of this embodiment.

The first packet forwarding rule includes a destination address, which is a network address of a third device in the external network or a default routing address, a next-hop address, which is an address of the home network device of this embodiment, and a forwarding interface, which is an interface on the gateway and used for communicating with the home network device of this embodiment. Correspondingly, the second packet forwarding rule includes a destination address, which is the network address of the third device in the external network or the default routing address, a next-hop address, which is an address of a routing device connected to the home network device of this embodiment, in the external network, and a forwarding interface, which is an interface on the home network device of this embodiment, for communicating with the external network.

In an optional implementation manner, as shown in FIG. 10, the home network device of this embodiment further includes an enabling module 1004. The enabling module 1004 is connected to the receiving module 1001, and configured to enable a NAT function on the home network device of this embodiment after the receiving module 1001 receives the first message.

In an optional implementation manner, the second packet forwarding rule is further used by the home network device of this embodiment to forward packets that come from the external network and are destined for the second device, to the gateway. Correspondingly, the first packet forwarding rule is further used by the gateway to forward packets that come from the home network device of this embodiment and are destined for the second device, to the second device.

The home network device provided by this embodiment may be implemented as the first device in the foregoing embodiment. Functional modules of the home network device may be configured to execute the corresponding procedures executed by the first device in the method embodiment shown in FIG. 1 to FIG. 3. Specific working principles of the home network device are not further described. For details, reference may be made to the description of the method embodiment.

The home network device provided by this embodiment may be various devices in the home network, for example, a smartphone, a personal computer, and a tablet computer.

The home network device provided by this embodiment, after a connection between a gateway and an external network is broken, sets a second packet forwarding rule locally and enables the gateway to set a first packet forwarding rule, so that packets that come from a second device in a home network and are destined for the external network can be forwarded by the gateway to the home network device of this embodiment, and then forwarded by the home network device of this embodiment to the external network. After the connection between the gateway and the external network is broken, communication between the second device in the home network and the external network is implemented without adding gateway hardware configurations, which improves reliability of communication between a device in the home network and the external network.

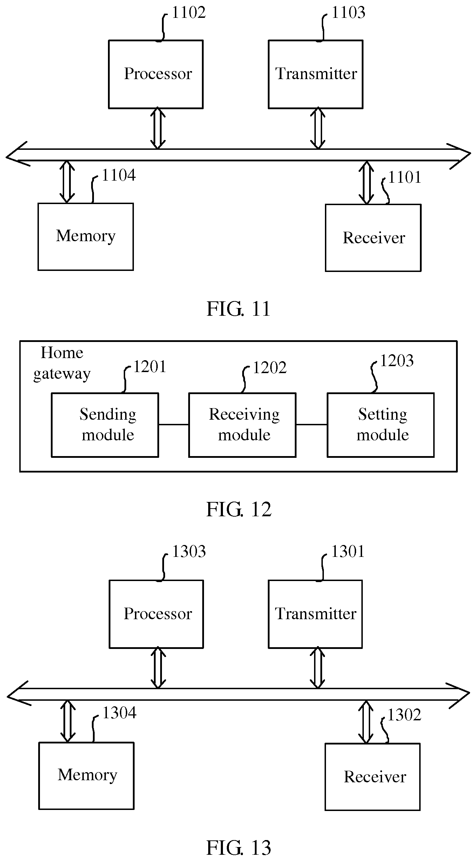

FIG. 11 is a schematic structural diagram of a home network device according to another embodiment of the present invention. As shown in FIG. 11, the home network device of this embodiment includes: a receiver 1101, a processor 1102, a transmitter 1103, a memory 1104, and a bus. The receiver 1101, processor 1102, transmitter 1103, and memory 1104 are interconnected and complete mutual communication through the bus. The bus may be an industry standard architecture (Industry Standard Architecture, ISA for short) bus, a peripheral component interconnect (Peripheral Component Interconnect, PCI for short) bus, or an extended industry standard architecture (Extended Industry Standard Architecture, EISA for short) bus, and so on. The bus may be classified into an address bus, a data bus, a control bus, and so on. For ease of expression, the bus is indicated by only a solid line in FIG. 11, which does not mean that only one bus or one type of bus exists.

The memory 1104 is configured to store a program. Specifically, the program may include program code, where the program code includes a computer operation instruction. In addition to storing the program, the memory 1104 may further store a message received by the receiver 1101 and temporarily store a message to be sent by the transmitter 1103, and so on. The memory 1104 may include a high-speed RAM memory, and may also include a non-volatile memory (non-volatile memory), for example, at least one disk storage.

The receiver 1101 is configured to receive a first message sent by a gateway in a home network, where the first message identifies that a first connection between the gateway and an external network is broken.

The transmitter 1103 is configured to send a second message to the gateway after the receiver 1101 receives the first message, where the second message is used to enable the gateway to set a first packet forwarding rule on the gateway, where the first packet forwarding rule is used by the gateway to forward packets that come from a second device in the home network and are destined for the external network, to the home network device of this embodiment.

The processor 1102 is configured to execute the program stored by the memory 1104, so as to set a second packet forwarding rule on the home network device of this embodiment after the receiver 1101 receives the first message, where the second packet forwarding rule is used by the home network device of this embodiment to forward packets that come from the gateway and are destined for the external network, through a second connection that is established by the home network device of this embodiment with the external network.

The processor 1102 of this embodiment may be a central processing unit (Central Processing Unit, CPU for short), or an application specific integrated circuit (Application Specific Integrated Circuit, ASIC for short), or is configured as one or more integrated circuits for implementing the embodiments of the present invention.

It is noted herein that the receiver 1101, processor 1102, and transmitter 1103 in this embodiment may be further integrated into a chip for implementation. In this implementation manner, the receiver 1101, processor 1102, and transmitter 1103 may implement mutual communication through an internal interface.

The home network device of this embodiment may be implemented as the first device in the foregoing embodiment, and may be configured to execute the corresponding procedures executed by the first device in the method embodiment shown in FIG. 1 to FIG. 3. Specific working principles of the home network device are not further described. For details, reference may be made to the description of the method embodiment.

The home network device provided by this embodiment may be various devices in the home network, for example, a smartphone, a personal computer, and a tablet computer.

The home network device provided by this embodiment, after a connection between a gateway and an external network is broken, sets a second packet forwarding rule locally and enables the gateway to set a first packet forwarding rule, so that packets that come from a second device in a home network and are destined for the external network can be forwarded by the gateway to the home network device of this embodiment, and then forwarded by the home network device of this embodiment to the external network. After the connection between the gateway and the external network is broken, communication between the second device in the home network and the external network is implemented without adding gateway hardware configurations, which improves reliability of communication between a device in the home network and the external network.

FIG. 12 is a schematic structural diagram of a home gateway according to an embodiment of the present invention. As shown in FIG. 12, the home gateway of this embodiment includes: a sending module 1201, a receiving module 1202, and a setting module 1203.

The sending module 1201 is configured to send a first message to a first device in a home network after a first connection between the home gateway of this embodiment in the home network and an external network is broken, where the first message identifies that the first connection is broken, to enable the first device to set a second packet forwarding rule on the first device, where the second packet forwarding rule is used by the first device to forward packets that come from the home gateway of this embodiment and are destined for the external network, through a second connection that is established by the first device with the external network.

The receiving module 1202 is configured to receive a second message sent by the first device. Optionally, the receiving module 1202 is connected to the sending module 1201, and configured to receive, after the sending module 1201 sends the first message to the first device, the second message sent by the first device.

The setting module 1203 is connected to the receiving module 1202, and configured to set a first packet forwarding rule on the home gateway of this embodiment according to the second message received by the receiving module 1202, where the first packet forwarding rule is used by the home gateway of this embodiment to forward packets that come from a second device in the home network and are destined for the external network, to the first device.

In an optional implementation manner, the receiving module 1202 is further configured to receive a third message sent by the first device. Correspondingly, the setting module 1203 is further configured to set a filter table on the home gateway of this embodiment according to the third message received by the receiving module 1202, so as to determine, according to the filter table, to-be-forwarded packets that come from the second device and are destined for the external network.

In an optional implementation manner, the setting module 1203 is further configured to reset the first packet forwarding rule after the first connection is restored, so that the sending module 1201 forwards the packets that come from the second device in the home network and are destined for the external network, through the first connection. Correspondingly, the sending module 1201 is further configured to: after the first connection is restored, forward the packets that come from the second device in the home network and are destined for the external network, through the first connection, and send a fourth message to the first device, where the fourth message identifies that the first connection is restored, to enable the first device to reset the second packet forwarding rule, so that the packets that are from the second device in the home network and destined for the external network are no longer forwarded through the second connection.

The first connection is a connection established with the external network through an uplink interface of the home gateway of this embodiment. Correspondingly, the second connection is a connection established with the external network through a radio interface of the first device.

The first packet forwarding rule includes a destination address, which is a network address of a third device in the external network or a default routing address, a next-hop address, which is an address of the first device, and a forwarding interface, which is an interface on the home gateway of this embodiment, for communicating with the first device. Correspondingly, the second packet forwarding rule includes a destination address, which is the network address of the third device in the external network or the default routing address, a next-hop address, which is an address of a routing device in the external network and connected to the first device, and a forwarding interface, which is an interface on the first device and used for communicating with the external network.

In an optional implementation manner, the second packet forwarding rule is further used by the first device to forward packets that come from the external network and are destined for the second device, to the home gateway of this embodiment. Correspondingly, the first packet forwarding rule is further used by the home gateway to forward packets that come from the first device and are destined for the second device, to the second device.

The home gateway of this embodiment may be implemented as the gateway in the foregoing embodiment, and may be configured to execute the corresponding procedures executed by the gateway in the method embodiment shown in FIG. 4 to FIG. 6. Specific working principles of the home gateway are not further described. For details, reference may be made to the description of the method embodiment.

The home gateway provided by this embodiment, after a connection with an external network is broken, sends a first message to a first device in a home network, so that the first device can know that the connection between the home gateway and the external network is broken and then set a second packet forwarding rule locally and control the home gateway of this embodiment to set a first packet forwarding rule, so that packets that come from a second device in the home network and are destined for the external network can be forwarded by the home gateway of this embodiment to the first device, and then forwarded by the first device to the external network. After the connection between the home gateway and the external network is broken, communication between the second device in the home network and the external network is implemented without adding gateway hardware configurations, which improves reliability of communication between a device in the home network and the external network.

FIG. 13 is a schematic structural diagram of a home gateway according to another embodiment of the present invention. As shown in FIG. 13, the home gateway of this embodiment includes: a transmitter 1301, a receiver 1302, a processor 1303, a memory 1304, and a bus. The transmitter 1301, receiver 1302, processor 1303, and memory 1304 are interconnected and complete mutual communication through the bus. The bus may be an ISA bus, a PCI bus, or an EISA bus, and so on. The bus may be classified into an address bus, a data bus, a control bus, and so on. For ease of expression, the bus is indicated by only a solid line in FIG. 13, which does not mean that only one bus or one type of bus exists.

The memory 1304 is configured to store a program. Specifically, the program may include program code, where the program code includes a computer operation instruction. In addition to storing the program, the memory 1304 may further store a message received by the receiver 1302 and temporarily store a message to be sent by the transmitter 1301, and so on. The memory 1304 may include a high-speed RAM memory, and may also include a non-volatile memory (non-volatile memory), for example, at least one disk storage.

The transmitter 1301 is configured to send a first message to a first device in a home network after a first connection between the home gateway of this embodiment in the home network and an external network is broken, where the first message identifies that the first connection is broken, to enable the first device to set a second packet forwarding rule on the first device, where the second packet forwarding rule is used by the first device to forward packets that come from the home gateway of this embodiment and are destined for the external network, through a second connection that is established by the first device with the external network.

The receiver 1302 is configured to receive, after the transmitter 1301 sends the first message to the first device, a second message sent by the first device.

The processor 1303 is configured to execute the program stored by the memory 1304, so as to set a first packet forwarding rule on the home gateway of this embodiment according to the second message received by the receiver 1302, where the first packet forwarding rule is used by the home gateway of this embodiment to forward packets that come from a second device in the home network and are destined for the external network, to the first device.

The processor 1303 of this embodiment may be a CPU, or a specific ASIC, or is configured as one or more integrated circuits for implementing the embodiments of the present invention.

It is noted herein that the transmitter 1301, receiver 1302, and processor 1303 in this embodiment may be further integrated into a chip for implementation. In this implementation manner, the transmitter 1301, receiver 1302, and processor 1303 may implement mutual communication through an internal interface.

The home gateway of this embodiment may be implemented as the gateway in the foregoing embodiment, and may be configured to execute the corresponding procedures executed by the gateway in the method embodiment shown in FIG. 4 to FIG. 6. Specific working principles of the home gateway are not further described. For details, reference may be made to the description of the method embodiment.

The home gateway provided by this embodiment, after a connection with an external network is broken, sends a first message to a first device in a home network, so that the first device can know that the connection between the home gateway and the external network is broken and then set a second packet forwarding rule locally and control the home gateway of this embodiment to set a first packet forwarding rule, so that packets that come from a second device in the home network and are destined for the external network can be forwarded by the home gateway of this embodiment to the first device, and then forwarded by the first device to the external network. After the connection between the home gateway and the external network is broken, communication between the second device in the home network and the external network is implemented without adding gateway hardware configurations, which improves reliability of communication between a device in the home network and the external network.

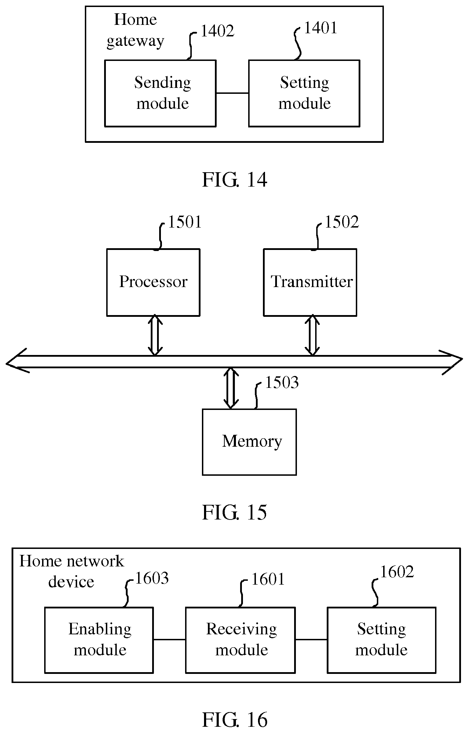

FIG. 14 is a schematic structural diagram of a home gateway according to still another embodiment of the present invention. As shown in FIG. 14, the home gateway of this embodiment includes: a setting module 1401 and a sending module 1402.

The setting module 1401 is configured to set a first packet forwarding rule on the home gateway of this embodiment when a first connection between the home gateway of this embodiment in a home network and an external network is broken, where the first packet forwarding rule is used by the home gateway of this embodiment to forward packets that come from a second device in the home network and are destined for the external network, to a first device in the home network.

The sending module 1402 is configured to send a first message to the first device, where the first message is used to enable the first device to set a second packet forwarding rule on the first device, where the second packet forwarding rule is used by the first device to forward packets that come from the home gateway of this embodiment and are destined for the external network, through a second connection that is established by the first device with the external network, so that the packets that are from the second device in the home network and destined for the external network are no longer forwarded through the second connection.

In an optional implementation manner, the setting module 1401 is further configured to set a filter table on the home gateway of this embodiment, so as to determine, according to the filter table, to-be-forwarded packets that come from the second device and are destined for the external network.

In an optional implementation manner, the setting module 1401 is further configured to reset the first packet forwarding rule after the first connection is restored, so that the sending module 1402 forwards the packets that come from the second device in the home network and are destined for the external network, through the first connection. Optionally, the sending module 1402 is connected to the setting module 1401.

Correspondingly, the sending module 1402 is further configured to: after the first connection is restored, forward the packets that come from the second device in the home network and are destined for the external network, through the first connection, and send a fourth message to the first device, where the fourth message identifies that the first connection is restored, to enable the first device to reset the second packet forwarding rule.

The first connection is a connection established with the external network through an uplink interface of the home gateway of this embodiment. Correspondingly, the second connection is a connection established with the external network through a radio interface of the first device.

The first packet forwarding rule includes a destination address, which is a network address of a third device in the external network or a default routing address, a next-hop address, which is an address of the first device, and a forwarding interface, which is an interface on the home gateway of this embodiment, for communicating with the first device. Correspondingly, the second packet forwarding rule includes a destination address, which is the network address of the third device in the external network or the default routing address, a next-hop address, which is an address of a routing device in the external network and connected to the first device, and a forwarding interface, which is an interface on the first device and used for communicating with the external network.

In an optional implementation manner, the second packet forwarding rule is further used by the first device to forward packets that come from the external network and are destined for the second device, to the home gateway of this embodiment. Correspondingly, the first packet forwarding rule is further used by the home gateway of this embodiment to forward packets that come from the first device and are destined for the second device, to the second device.

The home gateway of this embodiment may be implemented as the gateway in the foregoing method embodiment. Functional modules of the home gateway may be configured to execute the corresponding procedures executed by the gateway in the embodiment shown in FIG. 7 or FIG. 8. Specific working principles of the home gateway are not further described. For details, reference may be made to the description of the method embodiment.

The home gateway of this embodiment, after a connection with an external network is broken, sets a first packet forwarding rule locally and controls a first device in a home network to set a second packet forwarding rule locally, so that packets that come from a second device in the home network and are destined for the external network can be forwarded by the home gateway of this embodiment to the first device, and then forwarded by the first device to the external network. After the connection between the home gateway and the external network is broken, communication between the second device in the home network and the external network is implemented without adding gateway hardware configurations, which improves reliability of communication between a device in the home network and the external network.

FIG. 15 is a schematic structural diagram of a home gateway according to still another embodiment of the present invention. As shown in FIG. 15, the home gateway of this embodiment includes: a processor 1501, a transmitter 1502, a memory 1503, and a bus. The processor 1501, transmitter 1502, and memory 1503 are interconnected and complete mutual communication through the bus. The bus may be an ISA bus, a PCI bus, or an EISA bus, and so on. The bus may be classified into an address bus, a data bus, a control bus, and so on. For ease of expression, the bus is indicated by only a solid line in FIG. 15, which does not mean that only one bus or one type of bus exists.

The memory 1503 is configured to store a program. Specifically, the program may include program code, where the program code includes a computer operation instruction. In addition to storing the program, the memory 1503 may further temporarily store a message to be sent by the transmitter 1502, and so on. The memory 1503 may include a high-speed RAM memory, and may also include a non-volatile memory (non-volatile memory), for example, at least one disk storage.

The processor 1501 is configured to execute the program stored by the memory 1503, so as to implement: setting a first packet forwarding rule on the home gateway of this embodiment when a first connection between the home gateway of this embodiment in a home network and an external network is broken, where the first packet forwarding rule is used by the home gateway of this embodiment to forward packets that come from a second device in the home network and are destined for the external network, to a first device in the home network.

The processor 1501 of this embodiment may be a CPU, or a specific ASIC, or is configured as one or more integrated circuits for implementing the embodiments of the present invention.

The transmitter 1502 is configured to send a first message to the first device, where the first message is used to enable the first device to set a second packet forwarding rule on the first device, where the second packet forwarding rule is used by the first device to forward packets that come from the home gateway of this embodiment and are destined for the external network, through a second connection that is established by the first device with the external network.

It is noted herein that the processor 1501 and transmitter 1502 in this embodiment may be further integrated into a chip for implementation. In this implementation manner, the processor 1501 and transmitter 1502 may implement mutual communication through an internal interface.

The home gateway of this embodiment may be implemented as the gateway in the foregoing method embodiment, and may be configured to execute the corresponding procedures executed by the gateway in the embodiment shown in FIG. 7 or FIG. 8. Specific working principles of the home gateway are not further described. For details, reference may be made to the description of the method embodiment.

The home gateway of this embodiment, after a connection with an external network is broken, sets a first packet forwarding rule locally and controls a first device in a home network to set a second packet forwarding rule locally, so that packets that come from a second device in the home network and are destined for the external network can be forwarded by the home gateway of this embodiment to the first device, and then forwarded by the first device to the external network. After the connection between the home gateway and the external network is broken, communication between the second device in the home network and the external network is implemented without adding gateway hardware configurations, which improves reliability of communication between a device in the home network and the external network.

FIG. 16 is a schematic structural diagram of a home network device according to still another embodiment of the present invention. As shown in FIG. 16, the home network device of this embodiment includes: a receiving module 1601 and a setting module 1602.

The receiving module 1601 is configured to receive a first message sent by a gateway in a home network, where the first message is used to enable the home network device to set a second packet forwarding rule on the home network device, where the second packet forwarding rule is used by the home network device to forward packets that come from the gateway and are destined for an external network, through a second connection that is established by the home network device with the external network, where the packets that are from the gateway and destined for the external network come from a second device in the home network, and the first message is sent after a first connection between the gateway and the external network is broken.

The setting module 1602 is connected to the receiving module 1601, and configured to set the second packet forwarding rule according to the first message received by the receiving module 1601.

The first connection is a connection established with the external network through an uplink interface of the gateway. Correspondingly, the second connection is a connection established with the external network through a radio interface of the home network device of this embodiment.

The second packet forwarding rule includes a destination address, which is a network address of a third device in the external network or a default routing address, a next-hop address, which is an address of a routing device in the external network and connected to the home network device, and a forwarding interface, which is an interface on the home network device of this embodiment, for communicating with the external network.

In an optional implementation manner, the second packet forwarding rule is further used by the home network device of this embodiment to forward packets that come from the external network and are destined for the second device, to the gateway.

In an optional implementation manner, as shown in FIG. 16, the home network device of this embodiment further includes an enabling module 1603. The enabling module 1603 is configured to enable a NAT function on the home network device of this embodiment after the receiving module 1601 receives the first message. Optionally, the enabling module 1603 is connected to the receiving module 1601.

The home network device provided by this embodiment may be implemented as the first device in the foregoing embodiment. Functional modules of the home network device may be configured to execute the corresponding procedures executed by the first device in the method embodiment shown in FIG. 9. Specific working principles of the home network device are not further described. For details, reference may be made to the description of the method embodiment.

The home network device provided by this embodiment may be various devices in the home network, for example, a smartphone, a personal computer, and a tablet computer.

The home network device provided by this embodiment, after a connection between a gateway and an external network is broken, sets, under control of the gateway, a second packet forwarding rule locally, so that packets that come from a second device in a home network and are destined for the external network can be forwarded by the gateway to the home network device of this embodiment, and then forwarded by the home network device of this embodiment to the external network. After the connection between the gateway and the external network is broken, communication between the second device in the home network and the external network is implemented without adding gateway hardware configurations, which improves reliability of communication between a device in the home network and the external network.

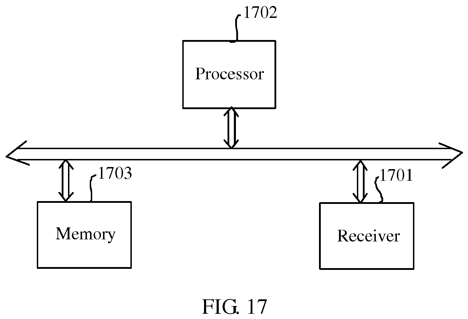

FIG. 17 is a schematic structural diagram of a home network device according to still another embodiment of the present invention. As shown in FIG. 17, the home network device of this embodiment includes: a receiver 1701, a processor 1702, a memory 1703, and a bus. The receiver 1701, processor 1702, and memory 1703 are interconnected and complete mutual communication through the bus. The bus may be an ISA bus, a PCI bus, or an EISA bus, and so on. The bus may be classified into an address bus, a data bus, a control bus, and so on. For ease of expression, the bus is indicated by only a solid line in FIG. 15, which does not mean that only one bus or one type of bus exists.

The memory 1703 is configured to store a program. Specifically, the program may include program code, where the program code includes a computer operation instruction. In addition to storing the program, the memory 1703 may further store a message received by the receiver 1701, and so on. The memory 1703 may include a high-speed RAM memory, and may also include a non-volatile memory (non-volatile memory), for example, at least one disk storage.

The receiver 1701 is configured to receive a first message sent by a gateway in a home network, where the first message is used to enable the home network device of this embodiment to set a second packet forwarding rule on the home network device of this embodiment, where the second packet forwarding rule is used by the home network device of this embodiment to forward packets that come from the gateway and are destined for an external network, through a second connection that is established by the home network device of this embodiment with the external network, where the packets that are from the gateway and destined for the external network come from a second device in the home network, and the first message is sent after a first connection between the gateway and the external network is broken.

The processor 1702 is configured to execute the program stored by the memory 1703, so as to implement: setting the second packet forwarding rule according to the first message received by the receiver 1701.

The processor 1702 of this embodiment may be a CPU, or a specific ASIC, or is configured as one or more integrated circuits for implementing the embodiments of the present invention.

It is noted herein that the receiver 1701, processor 1702, and memory 1703 in this embodiment may be further integrated into a chip for implementation. In this implementation manner, the receiver 1701, processor 1702, and memory 1703 may implement mutual communication through an internal interface.

The home network device provided by this embodiment may be implemented as the first device in the foregoing embodiment, and may be configured to execute the corresponding procedures executed by the first device in the method embodiment shown in FIG. 9. Specific working principles of the home network device are not further described. For details, reference may be made to the description of the method embodiment.

The home network device provided by this embodiment may be various devices in the home network, for example, a smartphone, a personal computer, and a tablet computer.

The home network device provided by this embodiment, after a connection between a gateway and an external network is broken, sets, under control of the gateway, a second packet forwarding rule locally, so that packets that come from a second device in a home network and are destined for the external network can be forwarded by the gateway to the home network device of this embodiment, and then forwarded by the home network device of this embodiment to the external network. After the connection between the gateway and the external network is broken, communication between the second device in the home network and the external network is implemented without adding gateway hardware configurations, which improves reliability of communication between a device in the home network and the external network.

Persons of ordinary skill in the art may understand that all or a part of the steps of the method embodiments may be implemented by a program instructing relevant hardware. The program may be stored in a computer readable storage medium. When the program runs, the steps of the method embodiments are performed. The foregoing storage medium includes: any medium that can store program code, such as a ROM, a RAM, a magnetic disk, or an optical disc.

Finally, it should be noted that the foregoing embodiments are merely intended for describing the technical solutions of the present invention, but not for limiting the present invention. Although the present invention is described in detail with reference to the foregoing embodiments, persons of ordinary skill in the art should understand that they may still make modifications to the technical solutions described in the foregoing embodiments without departing from the scope of the technical solutions of the embodiments of the present invention.

## Claims

1. A data transmission method, comprising:
receiving (101), by a first device in a home network, a first message sent by a gateway in the home network, wherein the first message identifies that a first connection between the gateway and an external network is broken;
sending (102), by the first device after receiving the first message, a second message to the gateway, the data transmission method being **characterized in that** the second message is used to enable the gateway to set a first packet forwarding rule on the gateway,
**in that** the first packet forwarding rule is used by the gateway to forward packets that come from a second device in the home network and are destined for the external network, to the first device; and
**in that** the data transmission method further comprises setting (103), by
the first device after receiving the first message, a second packet forwarding rule on the first device, wherein the second packet forwarding rule is used by the first device to forward packets that come from the gateway and are destined for the external network, through a second connection that is established by the first device with the external network.

2. The data transmission method according to claim 1, further comprising:
sending, by the first device after receiving the first message, a third message to the gateway, wherein the third message is used to enable the gateway to set a filter table on the gateway, so that the gateway determines, according to the filter table, to-be-forwarded packets that come from the second device and are destined for the external network.

3. The data transmission method according to claim 1, further comprising:
receiving, by the first device, a fourth message sent by the gateway, wherein the fourth message identifies that the first connection is restored; and
resetting, by the first device after receiving the fourth message, the second packet forwarding rule, so that the packets that are from the second device in the home network and destined for the external network are no longer forwarded through the second connection.

4. The data transmission method according to claim 1 or 2 or 3, wherein the first connection is a connection established with the external network through an uplink interface of the gateway, and the second connection is a connection established with the external network through a radio interface of the first device.

5. The data transmission method according to claim 1 or 2 or 3, wherein the first device communicates with the gateway through a wireless fidelity Wi-Fi interface.

6. The data transmission method according to claim 1 or 2 or 3, wherein: the first packet forwarding rule comprises a destination address, which is a network address of a third device in the external network or a default routing address, a next-hop address, which is an address of the first device, and a forwarding interface, which is an interface on the gateway and used for communicating with the first device; and
the second packet forwarding rule comprises a destination address, which is the network address of the third device in the external network or the default routing address, a next-hop address, which is an address of a routing device in the external network and connected to the first device, and a forwarding interface, which is an interface on the first device and used for communicating with the external network.

7. The data transmission method according to claim 1 or 2 or 3, further comprising:
enabling, by the first device after receiving the first message, a network address translation NAT function on the first device.

8. The data transmission method according to claim 1 or 2 or 3, wherein: the second packet forwarding rule is further used by the first device to forward packets that come from the external network and are destined for the second device, to the gateway; and
the first packet forwarding rule is further used by the gateway to forward packets that come from the first device and are destined for the second device, to the second device.

9. A home network device, comprising:
a receiving module (1201), configured to receive a first message sent by a gateway in a home network, wherein the first message identifies that a first connection between the gateway and an external network is broken;
a sending module (1202), configured to send a second message to the gateway after the receiving module receives the first message, the home network device being **characterized in that** the second message is used to enable the gateway to set a first packet forwarding rule on the gateway, **in that** the first packet forwarding rule is used by the gateway to forward packets that come from a second device in the home network and are destined for the external network, to the home network device; and
**in that** the home network device further comprises a setting module (1203), module (1203), configured to set a second packet forwarding rule on the home network device after the receiving module receives the first message, wherein the second packet forwarding rule is used by the home network device to forward packets that come from the gateway and are destined for the external network, through a second connection that is established by the home network device with the external network.

10. The home network device according to claim 9, wherein the sending module is further configured to send a third message to the gateway after the receiving module receives the first message, wherein the third message is used to enable the gateway to set a filter table on the gateway, so that the gateway determines, according to the filter table, to-be-forwarded packets that come from the second device and are destined for the external network.

11. The home network device according to claim 9, wherein: the receiving module is further configured to receive a fourth message sent by the gateway, wherein the fourth message identifies that the first connection is restored; and
the setting module is further configured to reset the second packet forwarding rule after the receiving module receives the fourth message, so that the packets that are from the second device in the home network and destined for the external network are no longer forwarded through the second connection.

12. The home network device according to claim 9 or 10 or 11, wherein the first connection is a connection established with the external network through an uplink interface of the gateway, and the second connection is a connection established with the external network through a radio interface of the home network device.

13. The home network device according to claim 9 or 10 or 11, wherein: the first packet forwarding rule comprises a destination address, which is a network address of a third device in the external network or a default routing address, a next-hop address, which is an address of the home network device, and a forwarding interface, which is an interface on the gateway and used for communicating with the home network device; and
the second packet forwarding rule comprises a destination address, which is the network address of the third device in the external network or the default routing address, a next-hop address, which is an address of a routing device in the external network and connected to the home network device, and a forwarding interface, which is an interface on the home network device and used for communicating with the external network.

14. The home network device according to claim 9 or 10 or 11, further comprising:
an enabling module, configured to enable a network address translation NAT function on the home network device after the receiving module receives the first message.

15. The home network device according to claim 9 or 10 or 11, wherein: the second packet forwarding rule is further used by the home network device to forward packets that come from the external network and are destined for the second device, to the gateway; and
the first packet forwarding rule is further used by the gateway to forward packets that come from the home network device and are destined for the second device, to the second device.

## Patentansprüche

1. Datenübertragungsverfahren, das Folgendes umfasst:
Empfangen (101) einer durch ein "Gateway" in einem Heimnetz gesendeten ersten Nachricht durch eine erste Vorrichtung im Heimnetz, wobei die erste Nachricht identifiziert, dass eine erste Verbindung zwischen dem "Gateway" und einem externen Netz unterbrochen ist;
Senden (102) einer zweiten Nachricht an das "Gateway" durch die erste Vorrichtung nach dem Empfangen der ersten Nachricht,
wobei das Datenübertragungsverfahren **dadurch gekennzeichnet ist, dass** die zweite Nachricht genutzt wird, um das "Gateway" zum Festlegen einer ersten Paketweiterleitungsregel auf dem "Gateway" zu aktivieren, dass die erste Paketweiterleitungsregel durch das "Gateway" genutzt wird, um Pakete, die von einer zweiten Vorrichtung im Heimnetz herkommen und das externe Netz als Ziel haben, an die erste Vorrichtung weiterzuleiten; und
dass das Datenübertragungsverfahren ferner Festlegen (103) einer zweiten Paketweiterleitungsregel auf der ersten Vorrichtung durch die erste Vorrichtung nach dem Empfangen der ersten Nachricht umfasst, wobei die zweite Paketweiterleitungsregel durch die erste Vorrichtung genutzt wird, um Pakete, die vom "Gateway" herkommen und das externe Netz als Ziel haben, über eine zweite Verbindung, die durch die erste Vorrichtung zum externen Netz aufgebaut wird, weiterzuleiten.

2. Datenübertragungsverfahren nach Anspruch 1, das ferner Folgendes umfasst:
Senden einer dritten Nachricht an das "Gateway" durch die erste Vorrichtung nach dem Empfangen der ersten Nachricht, wobei die dritte Nachricht genutzt wird, um das "Gateway" zum Festlegen einer Filtertabelle auf dem "Gateway" zu aktivieren, damit das "Gateway" weiterzuleitende Pakete, die von der zweiten Vorrichtung herkommen und das externe Netz als Ziel haben, gemäß der Filtertabelle ermittelt.

3. Datenübertragungsverfahren nach Anspruch 1, das ferner Folgendes umfasst:
Empfangen einer durch das "Gateway" gesendeten vierten Nachricht durch die erste Vorrichtung, wobei die vierte Nachricht identifiziert, dass die erste Verbindung wiederhergestellt ist; und
Zurücksetzen der zweiten Paketweiterleitungsregel durch die erste Vorrichtung nach dem Empfangen der vierten Nachricht, damit die Pakete, die von der zweiten Vorrichtung im Heimnetz sind und das externe Netz als Ziel haben, nicht mehr über die zweite Verbindung weitergeleitet werden.

4. Datenübertragungsverfahren nach Anspruch 1 oder 2 oder 3, wobei die erste Verbindung eine über eine Aufwärtsstreckenschnittstelle des "Gateways" zum externen Netz aufgebaute Verbindung ist und die zweite Verbindung eine über eine Funkschnittstelle der ersten Vorrichtung zum externen Netz aufgebaute Verbindung ist.

5. Datenübertragungsverfahren nach Anspruch 1 oder 2 oder 3, wobei die erste Vorrichtung mit dem "Gateway" über eine Schnittstelle für "Wireless Fidelity" Wi-Fi kommuniziert.

6. Datenübertragungsverfahren nach Anspruch 1 oder 2 oder 3, wobei: die erste Paketweiterleitungsregel eine Zieladresse, die eine Netzadresse einer dritten Vorrichtung im externen Netz oder eine Standardroutingadresse ist, eine Adresse des nächsten Hops, die eine Adresse der ersten Vorrichtung ist, und eine weiterleitende Schnittstelle, die eine Schnittstelle auf dem "Gateway" ist und zum Kommunizieren mit der ersten Vorrichtung genutzt wird, umfasst; und
die zweite Paketweiterleitungsregel eine Zieladresse, die die Netzadresse der dritten Vorrichtung im externen Netz oder die Standardroutingadresse ist, eine Adresse des nächsten Hops, die eine Adresse einer Routingvorrichtung im externen Netz und mit der ersten Vorrichtung verbunden ist, und eine weiterleitende Schnittstelle, die eine Schnittstelle auf der ersten Vorrichtung ist und zum Kommunizieren mit dem externen Netz genutzt wird, umfasst.

7. Datenübertragungsverfahren nach Anspruch 1 oder 2 oder 3, das ferner Folgendes umfasst:
Aktivieren einer Funktion für "Network Address Translation" NAT auf der ersten Vorrichtung durch die erste Vorrichtung nach dem Empfangen der ersten Nachricht.

8. Datenübertragungsverfahren nach Anspruch 1 oder 2 oder 3, wobei: die zweite Paketweiterleitungsregel ferner durch die erste Vorrichtung genutzt wird, um Pakete, die vom externen Netz herkommen und die zweite Vorrichtung als Ziel haben, an das "Gateway" weiterzuleiten; und
die erste Paketweiterleitungsregel ferner durch das "Gateway" genutzt wird, um Pakete, die von der ersten Vorrichtung herkommen und die zweite Vorrichtung als Ziel haben, an die zweite Vorrichtung weiterzuleiten.

9. Heimnetzvorrichtung, die Folgendes umfasst:
ein Empfangsmodul (1201), das konfiguriert ist, um eine durch ein "Gateway" in einem Heimnetz gesendete erste Nachricht zu empfangen, wobei die erste Nachricht identifiziert, dass eine erste Verbindung zwischen dem "Gateway" und einem externen Netz unterbrochen ist;
ein Sendemodul (1202), das konfiguriert ist, um eine zweite Nachricht an das "Gateway" zu senden, nachdem das Empfangsmodul die erste Nachricht empfangen hat, wobei die Heimnetzvorrichtung **dadurch gekennzeichnet ist, dass** die zweite Nachricht genutzt wird, um das "Gateway" zum Festlegen einer ersten Paketweiterleitungsregel auf dem "Gateway" zu aktivieren, dass die erste Paketweiterleitungsregel durch das "Gateway" genutzt wird, um Pakete, die von einer zweiten Vorrichtung im Heimnetz herkommen und das externe Netz als Ziel haben, an die Heimnetzvorrichtung weiterzuleiten; und
dass die Heimnetzvorrichtung ferner ein Festlegungsmodul (1203) umfasst, wobei das Modul (1203) konfiguriert ist, um eine zweite Paketweiterleitungsregel auf der Heimnetzvorrichtung festzulegen, nachdem das Empfangsmodul die erste Nachricht empfangen hat, wobei die zweite Paketweiterleitungsregel durch die Heimnetzvorrichtung genutzt wird, um Pakete, die vom "Gateway" herkommen und das externe Netz als Ziel haben, über eine zweite Verbindung, die durch die Heimnetzvorrichtung zum externen Netz aufgebaut wird, weiterzuleiten.

10. Heimnetzvorrichtung nach Anspruch 9, wobei das Sendemodul ferner konfiguriert ist, um eine dritte Nachricht an das "Gateway" zu senden, nachdem das Empfangsmodul die erste Nachricht empfangen hat, wobei die dritte Nachricht genutzt wird, um das "Gateway" zum Festlegen einer Filtertabelle auf dem "Gateway" zu aktivieren, damit das "Gateway" weiterzuleitende Pakete, die von der zweiten Vorrichtung herkommen und das externe Netz als Ziel haben, gemäß der Filtertabelle ermittelt.

11. Heimnetzvorrichtung nach Anspruch 9, wobei: das Empfangsmodul ferner konfiguriert ist, um eine durch das "Gateway" gesendete vierte Nachricht zu empfangen, wobei die vierte Nachricht identifiziert, dass die erste Verbindung wiederhergestellt ist; und
das Festlegungsmodul ferner konfiguriert ist, um die zweite Paketweiterleitungsregel zurückzusetzen, nachdem das Empfangsmodul die vierte Nachricht empfangen hat, damit die Pakete, die von der zweiten Vorrichtung im Heimnetz sind und das externe Netz als Ziel haben, nicht mehr über die zweite Verbindung weitergeleitet werden.

12. Heimnetzvorrichtung nach Anspruch 9 oder 10 oder 11, wobei die erste Verbindung eine über eine Aufwärtsstreckenschnittstelle des "Gateways" zum externen Netz aufgebaute Verbindung ist und die zweite Verbindung eine über eine Funkschnittstelle der Heimnetzvorrichtung zum externen Netz aufgebaute Verbindung ist.

13. Heimnetzvorrichtung nach Anspruch 9 oder 10 oder 11, wobei: die erste Paketweiterleitungsregel eine Zieladresse, die eine Netzadresse einer dritten Vorrichtung im externen Netz oder eine Standardroutingadresse ist, eine Adresse des nächsten Hops, die eine Adresse der Heimnetzvorrichtung ist, und eine weiterleitende Schnittstelle, die eine Schnittstelle auf dem "Gateway" ist und zum Kommunizieren mit der Heimnetzvorrichtung genutzt wird, umfasst; und
die zweite Paketweiterleitungsregel eine Zieladresse, die die Netzadresse der dritten Vorrichtung im externen Netz oder die Standardroutingadresse ist, eine Adresse des nächsten Hops, die eine Adresse einer Routingvorrichtung im externen Netz und mit der Heimnetzvorrichtung verbunden ist, und eine weiterleitende Schnittstelle, die eine Schnittstelle auf der Heimnetzvorrichtung ist und zum Kommunizieren mit dem externen Netz genutzt wird, umfasst.

14. Heimnetzvorrichtung nach Anspruch 9 oder 10 oder 11, die ferner Folgendes umfasst:
ein Aktivierungsmodul, das konfiguriert ist, um eine Funktion für "Network Address Translation" NAT auf der Heimnetzvorrichtung zu aktivieren, nachdem das Empfangsmodul die erste Nachricht empfangen hat.

15. Heimnetzvorrichtung nach Anspruch 9 oder 10 oder 11, wobei: die zweite Paketweiterleitungsregel ferner durch die Heimnetzvorrichtung genutzt wird, um Pakete, die vom externen Netz herkommen und die zweite Vorrichtung als Ziel haben, an das "Gateway" weiterzuleiten; und
die erste Paketweiterleitungsregel ferner durch das "Gateway" genutzt wird, um Pakete, die von der Heimnetzvorrichtung herkommen und die zweite Vorrichtung als Ziel haben, an die zweite Vorrichtung weiterzuleiten.

## Revendications

1. Procédé de transmission de données, comprenant les étapes suivantes :
recevoir (101),
par un premier dispositif dans un réseau domestique, un premier message envoyé par une passerelle dans le réseau domestique, où le premier message identifie qu'une première connexion entre la passerelle et un réseau externe est interrompue ;
envoyer (102),
par le premier dispositif après avoir reçu le premier message, un deuxième message à la passerelle,
le procédé de transmission de données étant **caractérisé en ce que** le deuxième message est utilisé pour permettre à la passerelle de définir une première règle de transfert de paquets sur la passerelle,
**en ce que** la première règle de transfert de paquets est utilisée par la passerelle pour transférer, au premier dispositif, des paquets qui proviennent d'un deuxième dispositif dans le réseau domestique et qui sont destinés au réseau externe ; et
**en ce que** le procédé de transmission de données comprend en outre de définir (103), par le premier dispositif après avoir reçu le premier message, une seconde règle de transfert de paquets sur le premier dispositif, où la seconde règle de transfert de paquets est utilisée par le premier dispositif pour transférer des paquets qui proviennent de la passerelle et qui sont destinés au réseau externe, par l'intermédiaire d'une seconde connexion qui est établie par le premier dispositif avec le réseau externe.

2. Procédé de transmission de données selon la revendication 1, comprenant en outre les étapes suivantes :
envoyer, par le premier dispositif après réception du premier message, un troisième message à la passerelle, où le troisième message est utilisé pour permettre à la passerelle de définir une table de filtrage sur la passerelle, de manière à ce que la passerelle détermine, en fonction de la table de filtrage, les paquets qui doivent être transférés qui proviennent du deuxième dispositif et qui sont destinés au réseau externe.

3. Procédé de transmission de données selon la revendication 1, comprenant en outre les étapes suivantes :
recevoir, par le premier dispositif, un quatrième message envoyé par la passerelle, où le quatrième message identifie que la première connexion est restaurée ; et
réinitialiser, par le premier dispositif après réception du quatrième message, la seconde règle de transfert de paquets, de manière à ce que les paquets qui proviennent du deuxième dispositif dans le réseau domestique et qui sont destinés au réseau externe ne soient plus transférés par l'intermédiaire de la seconde connexion.

4. Procédé de transmission de données selon la revendication 1 ou la revendication 2 ou la revendication 3, dans lequel la première connexion est une connexion établie avec le réseau externe par l'intermédiaire d'une interface de liaison montante de la passerelle, et la seconde connexion est une connexion établie avec le réseau externe par l'intermédiaire d'une interface radio du premier dispositif.

5. Procédé de transmission de données selon la revendication 1 ou la revendication 2 ou la revendication 3, dans lequel le premier dispositif communique avec la passerelle par l'intermédiaire d'une interface de fidélité sans fil WiFi.

6. Procédé de transmission de données selon la revendication 1 ou la revendication 2 ou la revendication 3, dans lequel : la première règle de transfert de paquets comprend une adresse de destination, qui est une adresse de réseau d'un troisième dispositif dans le réseau externe ou une adresse de routage par défaut, une adresse de saut suivant, qui est une adresse du premier dispositif, et une interface de transfert, qui est une interface sur la passerelle et qui est utilisée pour communiquer avec le premier dispositif ; et
la seconde règle de transfert de paquets comprend une adresse de destination, qui est l'adresse de réseau du troisième dispositif dans le réseau externe ou l'adresse de routage par défaut, une adresse de saut suivant, qui est une adresse d'un dispositif de routage dans le réseau externe et est connectée au premier dispositif, et une interface de transfert, qui est une interface sur le premier dispositif et qui est utilisée pour communiquer avec le réseau externe.

7. Procédé de transmission de données selon la revendication 1 ou la revendication 2 ou la revendication 3, comprenant en outre l'étape suivante :
activer, par le premier dispositif après avoir reçu le premier message, une fonction de traduction d'adresse de réseau NAT sur le premier dispositif.

8. Procédé de transmission de données selon la revendication 1 ou la revendication 2 ou la revendication 3, dans lequel : la seconde règle de transfert de paquets est en outre utilisée par le premier dispositif pour transférer à la passerelle des paquets qui proviennent du réseau externe et qui sont destinés au deuxième dispositif ; et
la première règle de transfert de paquets est en outre utilisée par la passerelle pour transférer au deuxième dispositif des paquets qui proviennent du premier dispositif et qui sont destinés au deuxième dispositif.

9. Dispositif de réseau domestique, comprenant :
un module de réception (1201),
configuré pour recevoir un premier message envoyé par une passerelle dans un réseau domestique, où le premier message identifie qu'une première connexion entre la passerelle et un réseau externe est interrompue ;
un module d'envoi (1202),
configuré pour envoyer un deuxième message à la passerelle après que le module de réception a reçu le premier message, le dispositif de réseau domestique étant **caractérisé en ce que** le deuxième message est utilisé pour
permettre à la passerelle de définir une première règle de transfert de paquets sur la passerelle, **en ce que** la première règle de transfert de paquets est utilisée par la passerelle pour transférer, au dispositif de réseau domestique, des paquets qui proviennent d'un deuxième dispositif dans le réseau domestique et qui sont destinés au réseau externe ; et
**en ce que** le dispositif de réseau domestique comprend en outre un module de définition (1203), configuré pour définir une seconde règle de transfert de paquets sur le dispositif de réseau domestique après que le module de réception a reçu le premier message, où la seconde règle de transfert de paquets est utilisée par le dispositif de réseau domestique pour transférer des paquets qui proviennent de la passerelle et qui sont destinés au réseau externe, par l'intermédiaire d'une seconde connexion qui est établie par le dispositif de réseau domestique avec le réseau externe.

10. Dispositif de réseau domestique selon la revendication 9, dans lequel le module d'envoi est en outre configuré pour envoyer un troisième message à la passerelle après que le module de réception a reçu le premier message, où le troisième message est utilisé pour permettre à la passerelle de définir une table de filtrage sur la passerelle, de manière à ce que la passerelle détermine, en fonction de la table de filtrage, les paquets devant être transférés qui proviennent du deuxième dispositif et qui sont destinés au réseau externe.

11. Dispositif de réseau domestique selon la revendication 9, dans lequel : le module de réception est en outre configuré pour recevoir un quatrième message envoyé par la passerelle, où le quatrième message identifie que la première connexion est restaurée ; et
le module de définition est en outre configuré pour réinitialiser la seconde règle de transfert de paquets après que le module de réception a reçu le quatrième message, de manière à ce que les paquets qui proviennent du deuxième dispositif dans le réseau domestique et qui sont destinés au réseau externe ne soient plus transférés par l'intermédiaire de la seconde connexion.

12. Dispositif de réseau domestique selon la revendication 9 ou la revendication 10 ou la revendication 11, dans lequel la première connexion est une connexion établie avec le réseau externe par l'intermédiaire d'une interface de liaison montante de la passerelle, et la seconde connexion est une connexion établie avec le réseau externe par l'intermédiaire d'une interface radio du dispositif de réseau domestique.

13. Dispositif de réseau domestique selon la revendication 9 ou la revendication 10 ou la revendication 11, dans lequel : la première règle de transfert de paquets comprend une adresse de destination, qui est une adresse de réseau d'un troisième dispositif dans le réseau externe ou une adresse de routage par défaut, une adresse de saut suivant, qui est une adresse du dispositif de réseau domestique, et une interface de transfert, qui est une interface sur la passerelle et qui est utilisée pour communiquer avec le dispositif de réseau domestique ; et
la seconde règle de transfert de paquets comprend une adresse de destination, qui est l'adresse de réseau du troisième dispositif dans le réseau externe ou l'adresse de routage par défaut, une adresse de saut suivant, qui est une adresse d'un dispositif de routage dans le réseau externe et qui est connectée au dispositif de réseau domestique, et une interface de transfert, qui est une interface sur le dispositif de réseau domestique et qui est utilisée pour communiquer avec le réseau externe.

14. Dispositif de réseau domestique selon la revendication 9 ou la revendication 10 ou la revendication 11, comprenant en outre :
un module d'activation, configuré pour activer une fonction de traduction d'adresse de réseau NAT sur le dispositif de réseau domestique après que le module de réception a reçu le premier message.

15. Dispositif de réseau domestique selon la revendication 9 ou la revendication 10 ou la revendication 11, dans lequel : la seconde règle de transfert de paquets est en outre utilisée par le dispositif de réseau domestique pour transférer à la passerelle des paquets qui proviennent du réseau externe et qui sont destinés au deuxième dispositif ; et
la première règle de transfert de paquets est en outre utilisée par la passerelle pour transférer au deuxième dispositif des paquets qui proviennent du dispositif de réseau domestique et qui sont destinés au deuxième dispositif.
